(19) Europäisches Patentamt / European Patent Office / Office européen des brevets

(11) **EP 1 811 371 A1**

(12) **DEMANDE DE BREVET EUROPEEN**

(43) Date de publication:
**25.07.2007 Bulletin 2007/30**

(51) Int Cl.:
*G06F 7/78* (2006.01)     *G06F 9/06* (2006.01)
*G06F 15/76* (2006.01)

(21) Numéro de dépôt: **07100940.1**

(22) Date de dépôt: **22.01.2007**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **24.01.2006 FR 0600655**

(71) Demandeur: **ATMEL NANTES SA**
**44306 Nantes Cédex 3 (FR)**

(72) Inventeurs:
• **GARNIER, Sylvain**
  **44300, NANTES (FR)**
• **LE DILY, Mickael**
  **44240, LA CHAPELLE-SUR-ERDRE (FR)**
• **DEMANGE, Frédéric**
  **44000, NANTES (FR)**

(54) **Dispositif de traitement en notation polonaise inversée pour la manipulation de tableau, et circuit intégré électronique comprenant un tel dispositif de traitement**

(57) L'invention concerne un dispositif de traitement en notation polonaise inversée, permettant d'exécuter un jeu d'instructions et mettant en oeuvre une gestion d'une pile dont la taille est variable.

Selon l'invention, un tel dispositif comprend :
- des moyens de mémorisation comprenant une mémoire vive (MEM1) ;
- des moyens (M0,M1,M2) de gestion d'un pointeur de pile, qui est une adresse physique, dans la mémoire vive, associée à un étage de référence de la pile ;
- des moyens (M20,M24,M22,M23,M25) de gestion de pointeur(s) d'élément de référence, qui est une adresse physique, dans la mémoire vive, associée à un élément de référence parmi des éléments d'un tableau donné contenus dans la pile.

Le dispositif selon l'invention peut exécuter au moins une instruction de manipulation de tableau, relativement au(x) pointeur(s) d'élément de référence.

Fig. 1

EP 1 811 371 A1

**Description**

## 1. DOMAINE DE L'INVENTION

Le domaine de l'invention est celui des circuits électroniques.

Plus précisément, l'invention concerne un dispositif de traitement en notation polonaise inversée (ou RPN, pour « Reverse Polish Notation » en anglais), du type permettant l'exécution d'instructions relatives à des manipulations de tableaux.

De façon classique, un tel dispositif de traitement comprend une pile (« stack » en anglais), de taille variable, gérée selon un mode « dernier entré premier sorti » (ou LIFO, pour « Last In First Out » en anglais), avec des pointeurs de pile. Cette pile permet de stocker sur des étages des éléments de tableau. Un élément de tableau est par exemple un octet.

Le dispositif de traitement selon l'invention a de nombreuses applications, telles que par exemple la mise en oeuvre de calcul matriciel à n dimension(s), avec $n \geq 1$.

L'invention s'applique notamment, mais non exclusivement, dans le traitement de flux audio compressé, par exemple, au format MP3 (« MPEG-1/2 Audio Layer 3 » en anglais), WMA (« Windows Media Audio » en anglais), etc.

## 2. ART ANTÉRIEUR

Actuellement, les dispositifs de traitement en notation polonaise inversée sont implémentés de manière logicielle par exemple dans un microprocesseur. De tels dispositifs de traitement peuvent être programmés en langage Java, C, C++,....

A titre d'exemple, la société Hewlett Packard a développé une calculatrice dotée d'un langage de programmation postfixé appelé, lisp polonais inversé (ou RPL, pour « Reverse Polish Lisp » en anglais), selon lequel une pile est implémentée de manière logicielle à l'aide d'un microprocesseur Saturn 4-bit (commercialisé par Motorola). Cette « pile logicielle » est une pile de pointeurs pointant sur des objets qui sont classiquement représentés par des groupes de mots de taille variable gérés par un système d'exploitation. Le système d'exploitation (c'est-à-dire un logiciel) permet d'effectuer des opérations sur des objets.

Bien que l'implémentation logicielle de dispositif de traitement en notation polonaise inversée ait représenté un progrès important, cette technique connue présente néanmoins les désavantages d'être coûteuse en terme de ressources (mémoire, CPU,...) et d'avoir des temps de calcul longs.

Un autre inconvénient majeur de cette technique connue réside dans le fait qu'elle nécessite une surcouche logicielle.

En outre, les inventeurs ont constaté que l'utilisation d'une telle implémentation pouvait provoquer une forte consommation électrique.

Par ailleurs, concernant les tableaux (aussi appelés matrices), la solution proposée par Hewlett Packard consiste à assimiler un tableau à un objet. Un objet est par exemple une matrice à n dimension(s). Il est important de noter que chaque tableau qui est défini par le système d'exploitation est un objet de taille variable et occupe un seul étage dans la pile. Ainsi, avec une telle implémentation logicielle, la pile ne contient pas des éléments de tableaux, mais des tableaux, ce qui rend plus complexe les calculs impliquant ces tableaux. En effet, c'est le système d'exploitation qui doit gérer les calculs faisant intervenir les éléments de tableau.

## 3. OBJECTIFS DE L'INVENTION

L'invention a notamment pour objectif de pallier ces différents inconvénients de l'état de la technique.

Plus précisément, l'un des objectifs de la présente invention, dans au moins un mode de réalisation, est de fournir un dispositif de traitement en notation polonaise inversée qui soit simple à mettre en oeuvre de manière matérielle et bien adapté à la manipulation de tableaux de données.

L'invention a aussi pour objectif de proposer un tel dispositif de traitement qui, dans au moins un mode de réalisation, soit notamment bien adapté au décodage de flux audio de type MP3/WMA.

Un autre objectif de l'invention est de proposer un tel dispositif de traitement qui, dans un mode de réalisation particulier, soit peu coûteux, notamment en terme de ressources.

Un autre objectif de l'invention est de proposer un tel dispositif de traitement qui, dans un mode de réalisation particulier, ne nécessite aucune surcouche logicielle.

Un autre objectif de l'invention est de proposer un tel dispositif de traitement qui, dans un mode de réalisation particulier, soit efficace, notamment en terme de consommation électrique.

## 4. EXPOSÉ DE L'INVENTION

Ces différents objectifs, ainsi que d'autres qui apparaîtront par la suite, sont atteints selon l'invention à l'aide d'un dispositif de traitement en notation polonaise inversée, permettant d'exécuter un jeu d'instructions et mettant en oeuvre une gestion d'une pile dont la taille est variable.

Selon l'invention, le dispositif comprend :

- des moyens de mémorisation comprenant une mémoire vive ;
- des moyens de gestion d'un pointeur de pile, qui est une adresse physique, dans ladite mémoire vive, associée à un étage de référence de la pile, chaque étage de la pile étant tel que quand la pile évolue il occupe une position fixe dans la pile mais est associé à une adresse physique, dans ladite mémoire vive, qui varie ;
- des moyens de gestion d'au moins un pointeur d'élément de référence, qui est une adresse physique, dans ladite mémoire vive, associée à un élément de référence parmi des éléments d'un tableau donné contenus dans la pile, ledit élément de référence étant tel que quand la pile évolue il peut se situer à différents étages de la pile mais est associé à une adresse physique qui ne varie pas.

Le dispositif selon l'invention peut exécuter au moins une instruction de manipulation de tableau, relativement audit au moins un pointeur d'élément de référence.

Ainsi, l'invention repose sur une approche tout à fait nouvelle et inventive pour la gestion d'une pile implémentée dans une mémoire vive. En effet, l'invention s'appuie sur un mécanisme d'adressage, mettant en oeuvre un premier pointeur qui pointe en permanence une adresse physique (en mémoire vive) associée à un étage de référence, de façon à contrôler les déplacements des contenus des étages de la pile par rapport à l'étage de référence, et un second pointeur pointant en permanence une adresse physique (en mémoire vive) (dite adresse racine) contenant un élément de référence, de sorte que les instructions de manipulation de tableau s'exécutent relativement à l'adresse racine.

Selon un aspect avantageux de l'invention, lesdits moyens de gestion d'au moins un pointeur d'élément de référence comprennent des moyens de gestion d'un pointeur d'élément de référence absolue, qui est une adresse physique, dans ladite mémoire vive, associée à un élément de référence absolue parmi les éléments d'un tableau donné contenus dans la pile.

Dans un mode de réalisation préférentiel de l'invention, lesdits moyens de gestion d'au moins un pointeur d'élément de référence comprennent des moyens de gestion d'un pointeur d'élément de référence relative, qui est une adresse physique, dans ladite mémoire vive, associée à un élément de référence relative parmi les éléments d'un tableau donné contenus dans la pile.

Dans un autre mode de réalisation, l'invention concerne un circuit intégré électronique comprenant un dispositif de traitement tel que précité. Par circuit intégré électronique on entend notamment, mais non exclusivement, un processeur, un microprocesseur, un contrôleur, un microcontrôleur ou un coprocesseur.

## 5. LISTE DES FIGURES

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :

- la figure 1 est un schéma logique d'un mode de réalisation particulier du dispositif de traitement d'instructions de manipulation de tableaux selon l'invention ;
- la figure 2 est un schéma logique d'un mode de réalisation particulier du dispositif de traitement d'instructions arithmétiques et de manipulation de données selon l'invention ;
- la figure 3 présente un schéma logique simplifié d'un mode de réalisation particulier d'un mécanisme d'exécution d'une instruction du type CELLREPL(X) ;
- la figure 4 présente un schéma logique simplifié d'un mode de réalisation particulier d'un mécanisme d'exécution d'une instruction du type GETCELLREL(X) ;
- la figure 5 est une représentation d'un exemple de l'évolution des contenus des étages d'une pile LIFO d'un dispositif de traitement selon l'invention ; et
- la figure 6 est une représentation d'un exemple de l'évolution du plan mémoire et des registres de calcul d'un dispositif de traitement selon l'invention.

## 6. DESCRIPTION D'UN MODE DE RÉALISATION PARTICULIER

Sur toutes les figures du présent document, les éléments ou signaux identiques sont désignés par une même référence alphanumérique.

L'invention concerne donc une architecture matérielle d'un dispositif de traitement en notation polonaise inversée comprenant des pointeurs physiques de tableau, lui conférant la capacité de gérer de façon optimale une pile pouvant contenir des éléments de tableau d'une part et d'exécuter des instructions de manipulation de ces éléments de tableau d'autre part, notamment pour le calcul matriciel. Le principe général de l'invention repose sur une technique d'adressage permettant d'attribuer à chaque élément de tableau une adresse physique constante. Ainsi, l'invention propose de mettre en oeuvre un pointeur physique qui contient l'adresse d'un élément de tableau déterminé (adresse constante), de façon à obtenir un repère absolu qui ne subit pas les variations de la pile.

En outre, l'invention, dans un de ses modes de réalisation, propose de gérer une pile LIFO, dont les premiers étages sont mis en oeuvre dans une mémoire cache et les autres étages dans une mémoire vive. Pour ce faire, le dispositif de traitement selon l'invention comprend des moyens de gestion des débordements de contenu des étages, depuis la mémoire cache vers la mémoire vive, et inversement.

A titre indicatif et non limitatif, on se place dans la suite de la description dans le cas particulier d'un interfaçage « microprocesseur/co-processeur », dans lequel un dispositif d'interfaçage (généralement appelé FIFO, pour « First In First Out » en anglais) est placé entre un microprocesseur (généralement appelé CPU, pour « Central Processing Unit » en anglais) et un co-processeur, dans lequel est implémenté (de manière matérielle) le dispositif de traitement de l'invention. Il est clair que l'invention peut être mise en oeuvre dans un co-processeur de type 8 bits, 16 bits, 32 bits, etc.

On rappelle que dans une telle configuration le co-processeur traite des flux d'information pour réduire la charge du microprocesseur. En effet, le microprocesseur transmet des instructions (c'est-à-dire des groupes de mots de taille variable), via le dispositif d'interfaçage, au co-processeur afin qu'il les exécute.

Par souci de simplification de la description, on se limitera, dans toute la suite de ce document, à décrire le cas particulier d'une implémentation matérielle, dans laquelle l'étage de référence de la pile est le premier étage de la pile, et pour chacun des deux premiers étages de la pile, notés respectivement Etage 0 et Etage 1, le contenu de l'étage est stocké dans la mémoire cache, et pour chacun des autres étages de la pile, le contenu de l'étage est stocké dans la mémoire vive.

L'Homme du Métier étendra sans difficulté cet enseignement à un nombre supérieur d'étages dont les contenus peuvent être stockés dans la mémoire cache.

## 6.1 Description générale du dispositif de traitement

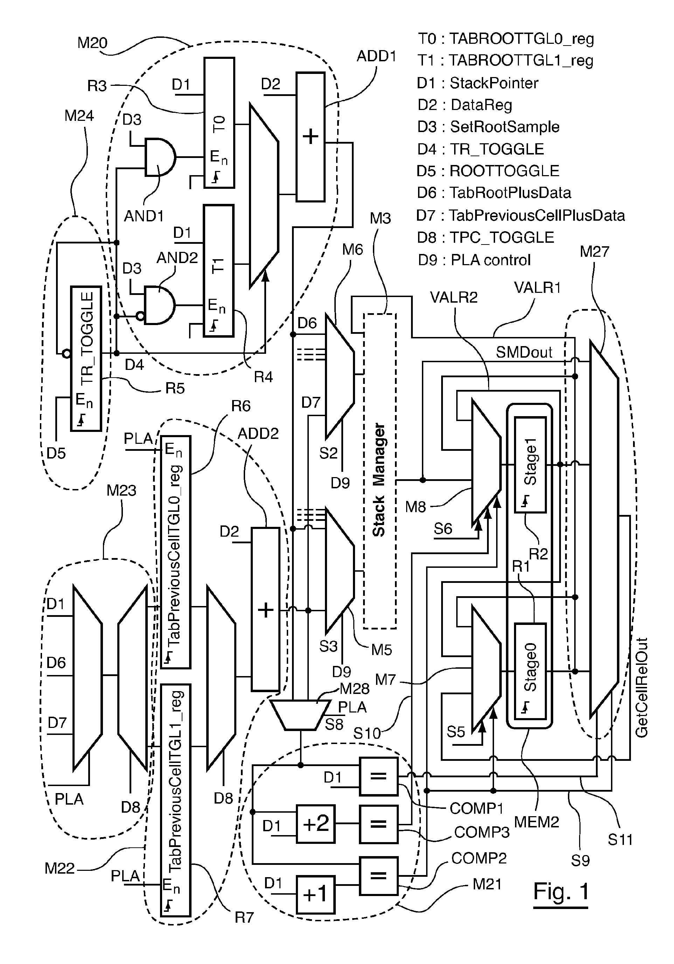

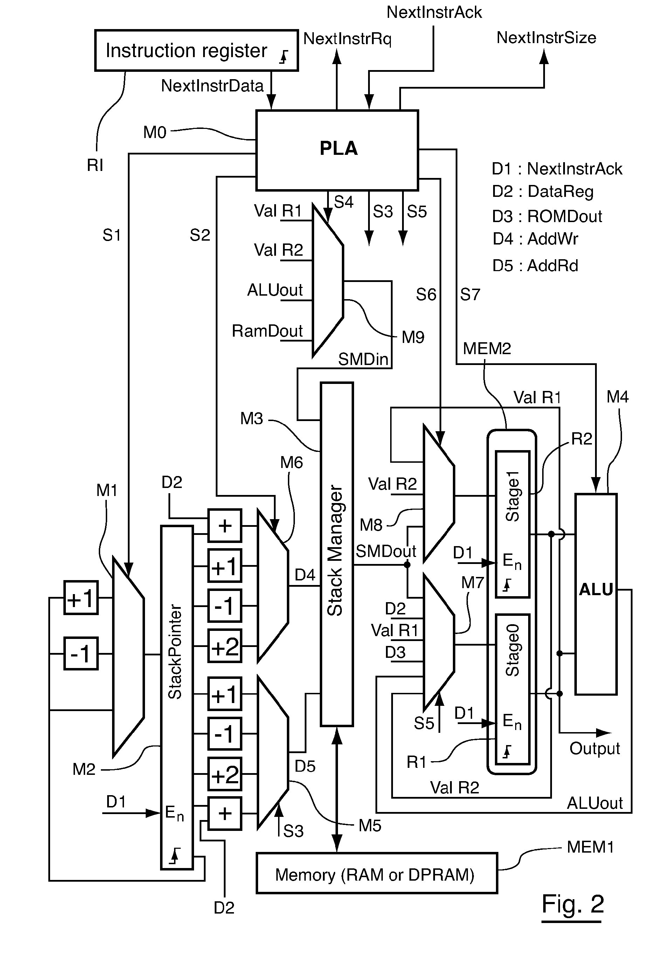

On décrit désormais en relation avec les figures 1 et 2 un dispositif de traitement selon un mode de réalisation préférentiel de l'invention.

Dans ce mode de réalisation, le dispositif de traitement selon l'invention est embarqué dans un co-processeur et comprend deux familles de moyens :

- une première famille de moyens (figure 1) dédiée à l'exécution d'instructions de manipulation de tableau et comprenant des moyens M20, M24, M22, M23 et M25 de gestion d'un pointeur d'élément de référence qui est une adresse physique, dans la mémoire vive, associée à un élément de référence déterminé, contenu dans la pile. L'élément de référence étant tel que, quand la pile évolue, il peut se situer à différents étages de la pile mais est associé à une adresse physique qui ne varie pas. Comme on le verra par la suite, ces moyens permettent au dispositif d'exécuter une(des) instruction(s) de manipulation de tableau, relativement au pointeur d'élément de référence. Les moyens M20, M24, M22, M23 et M25 de gestion du pointeur d'élément de référence comprennent eux-mêmes :

    o des moyens M20 et M24 de gestion d'un pointeur d'élément de référence absolue qui est une adresse physique, dans la mémoire vive, associée à un élément de référence absolue déterminé, contenu dans la pile ;
    o des moyens M22, M23 et M25 de gestion d'un pointeur d'élément de référence relative qui est une adresse physique, dans la mémoire vive, associée à un élément de référence relative déterminé, contenu dans la pile ;

- une seconde famille de moyens (figure 2) dédiée à l'exécution d'instructions arithmétiques et de manipulation de données, et comprenant :

    o des moyens de mémorisation comprenant une mémoire vive RAM (MEM1) (pour « Random Access Memory » en anglais) et une mémoire cache (MEM2) ;
    o des moyens M0, M1 et M2 de gestion d'un pointeur de pile qui est une adresse physique, dans la mémoire vive, associée à un étage de référence de la pile. Chaque étage de la pile étant tel que, quand la pile évolue, il occupe une position fixe dans la pile mais est associé à une adresse physique, dans la mémoire vive, qui varie. Dans le mode de réalisation illustré, l'étage de référence de la pile est le premier étage Etage 0 de la pile ;

- des moyens M0, M5, M6, M9, M3, M7, M8, M21 et M27 de gestion des contenus des étages de la pile, en fonction du pointeur de pile tels que, pour chacun des deux premiers étages de la pile Etage 0 et Etage 1, le contenu de l'étage est stocké dans la mémoire cache, et pour chacun des autres étages de la pile, le contenu de l'étage est stocké dans la mémoire vive, à l'adresse physique associée à l'étage. Comme on le verra par la suite, ces moyens permettent de gérer des débordements de contenu, depuis la mémoire cache vers la mémoire vive, et inversement.

## 6.2 Description détaillée des moyens pour l'exécution d'instructions de manipulation de tableau spécifiques à l'invention

On va décrire maintenant, en relation avec la figure 1, les moyens de gestion du pointeur d'élément de référence absolue et les moyens de gestion du pointeur d'élément de référence relative spécifiques à l'invention.

Dans le mode de réalisation illustré, les moyens de gestion du pointeur d'élément de référence absolue comprennent :

- deux registres R3 (Tabroottgl0_reg) et R4 (Tabroottgl1_reg) associés chacun à un tableau en accès absolu, appelés premiers registres. Chaque premier registre contient la valeur courante du pointeur d'élément de référence absolue (c'est-à-dire l'adresse physique courante en mémoire de l'étage de la pile contenant l'élément de référence absolue) pour le tableau en accès absolu auquel il est associé, et possède une entrée recevant la valeur courante (Stack-Pointer) du pointeur de pile. Comme illustré, chaque premier registre est activé par un signal d'activation (En) prenant un état actif (En=1) quand l'instruction courante est une instruction (par exemple du type SETROOT) impliquant un changement d'élément de référence absolue ;
- des premiers moyens de sélection M24 d'un tableau parmi les deux tableaux en accès absolu précités (associés aux premiers registres). Ces premiers moyens de sélection comprennent un registre R5 qui est activé par un signal d'activation (En) prenant un état actif (En=1) quand une instruction du type « ROOTTOGGLE » est exécutée (ROOTTOGGLE=1). Ce registre R5 délivre en sortie un signal TR_TOGGLE qui change de valeur (« 1 » ou « 0 ») à chaque exécution de l'instruction « ROOTTOGGLE ». Le signal TR_TOGGLE est envoyé vers les premières entrées de deux portes logiques « ET » (« AND » en anglais) AND1 et AND2, dont les secondes entrées reçoivent chacune un signal indiquant qu'un changement d'élément de référence absolue est demandé (SETROOT=1). Comme illustré, la sortie de la première porte logique « ET » AND1 est reliée à l'entrée d'activation (En) du premier registre R3 (Tabroottgl0_reg) associé au premier tableau en accès absolu et la sortie de la seconde porte logique « ET » AND2 est reliée à l'entrée d'activation (En) du second registre R4 (Tabroottgl1_reg) associé au second tableau en accès absolu. Ainsi, lors de l'exécution de l'instruction « SETROOT » (SETROOT=1) :

  o si TR_TOGGLE vaut « 0 », alors on sélectionne le premier registre R3 (Tabroottgl0_reg) associé au premier tableau en accès absolu, de façon à mettre à jour ce registre R3 (Tabroottgl0_reg) avec la valeur courante (StackPointer) du pointeur de pile ;
  o si TR_TOGGLE vaut « 1 », alors on sélectionne le second registre R4 (Tabroottgl1_reg) associé au second tableau en accès absolu, de façon à mettre à jour ce registre R4 (Tabroottgl1_reg) avec la valeur courante (StackPointer) du pointeur de pile.

On note que l'exécution de l'instruction « ROOTTOGGLE » peut avoir un impact sur d'autres types d'instructions, notamment, mais non exclusivement, les instructions « GETCELL » et « CELLREPL ». Plus précisément, « ROOTTOGGLE » permet de changer la référence de la première case d'un tableau vue par « GETCELL » et « CELLREPL ». En effet, si TR_TOGGLE vaut « 0 », alors les deux instructions « GETCELL » et « CELLREPL » opèrent à partir de la case pointée par Tabroottgl0_reg (c'est-à-dire le registre associé au premier tableau en accès absolu), sinon elles opèrent à partir de la case pointée par Tabroottgl1_reg (c'est-à-dire le registre associé au second tableau en accès absolu) ;

- des premiers moyens d'addition permettant, pour un tableau sélectionné parmi les deux tableaux en accès absolu précités, de déterminer l'adresse physique en mémoire (TabRootPlusData) d'un étage de la pile dont le contenu est le Xième (aussi appelé DataRegième) élément du tableau sélectionné à partir de l'élément de référence absolue. Ces premiers moyens d'addition comprennent un additionneur ADD1 recevant sur une première entrée la valeur courante du pointeur d'élément de référence absolue (pour le tableau sélectionné) et sur une seconde entrée un nombre d'unités DataReg indiqué dans un mot d'opérande de l'instruction courante. L'additionneur ADD1 délivre donc en sortie, l'adresse physique en mémoire de la DataRegième case du tableau sélectionné, correspondant à la valeur courante du pointeur d'élément de référence absolue (c'est-à-dire l'adresse physique courante en mémoire de l'étage de la pile contenant l'élément de référence absolue) incrémentée du nombre d'unités DataReg.

Dans le présent mode de réalisation, les moyens de gestion du pointeur d'élément de référence relative comprennent :

- deux registres R6 (TabPreviousCellTgl0_reg) et R7 (TabPreviousCellTgl1_reg) associés chacun à un tableau en accès relatif, appelés deuxièmes registres. Chaque deuxième registre contient la valeur courante du pointeur d'élément de référence relative (c'est-à-dire l'adresse physique courante en mémoire de l'étage de la pile contenant l'élément de référence relative) pour le tableau en accès relatif auquel il est associé, et possède une entrée recevant l'un des trois signaux suivants en fonction de l'instruction courante, par exemple :

  o si l'instruction courante est une instruction du type « SETROOT », alors l'entrée reçoit la valeur courante (StackPointer) du pointeur de pile ;
  o si l'instruction courante est une instruction du type « GETCELL », alors l'entrée reçoit la valeur courante du pointeur d'élément de référence absolue incrémentée du nombre d'unités DataReg, appelée TabRootPlusData ;
  o si l'instruction courante est une instruction du type « GETCELLREL », alors l'entrée reçoit la valeur courante du pointeur d'élément de référence relative incrémentée du nombre d'unités DataReg, appelée TabPreviousCellPlusData.

  Comme illustré, chaque deuxième registre est activé par un signal d'activation (En) prenant un état actif (En=1) quand l'instruction courante est une instruction (par exemple du type SETROOT, GETCELL ou GETCELLREL) impliquant un changement d'élément de référence relative ;
- des seconds moyens de sélection M25 d'un tableau parmi les deux tableaux en accès relatif précités (associés aux deuxièmes registres). Ces seconds moyens de sélection comprennent un registre R8 qui est activé par un signal d'activation (En) prenant un état actif (En=1) quand une instruction du type « GCR_TOGGLE » est exécutée (GCR_TOGGLE=1). Ce registre R8 délivre en sortie un signal TPC_TOGGLE qui change de valeur (« 1 » ou « 0 ») à chaque exécution de l'instruction « GCR_TOGGLE ». Ainsi, lors de l'exécution de l'instruction « GCR_TOGGLE » (GCR_TOGGLE =1) :

  o si TPC_TOGGLE vaut « 0 », alors on sélectionne le premier registre R6 (TabPreviousCellTgl0_reg) associé au premier tableau en accès relatif, de façon à mettre à jour ce registre R6 (TabPreviousCellTgl0_reg) avec l'un des trois signaux précités StackPointer, TabRootPlusData, ou TabPreviousCellPlusData, en fonction de l'instruction courante ;
  o si TPC_TOGGLE vaut « 1 », alors on sélectionne le second registre R7 (TabPreviousCellTgl1_reg) associé au second tableau en accès relatif, de façon à mettre à jour ce registre R7 (TabPreviousCellTgl1_reg) avec l'un des trois signaux précités StackPointer, TabRootPlusData, ou TabPreviousCellPlusData, en fonction de l'instruction courante.

On note que l'exécution de l'instruction « GCR_TOGGLE » peut avoir un impact sur d'autres types d'instructions, notamment, mais non exclusivement, l'instruction « GETCELLREL ». Plus précisément, « GCR_TOGGLE » permet de changer la référence de la première case d'un tableau vue par « GETCELLREL ». En effet, si TPC_TOGGLE vaut « 0 », alors l'instruction « GETCELLREL » opère à partir de la case pointée par TabPreviousCellTgl0_reg (c'est-à-dire le registre associé au premier tableau en accès relatif), sinon elle opère à partir de la case pointée par TabPreviousCellTgl1_reg (c'est-à-dire le registre associé au second tableau en accès relatif) ;

- des seconds moyens d'addition permettant, pour un tableau sélectionné parmi les deux tableaux en accès relatif précités, de déterminer l'adresse physique en mémoire (TabPreviousCellPlusData) d'un étage de la pile dont le contenu est le DataRegième élément du tableau sélectionné à partir de l'élément de référence relative. Ces seconds moyens d'addition comprennent un additionneur ADD2 recevant sur une première entrée la valeur courante du pointeur d'élément de référence relative (pour le tableau sélectionné) et sur une seconde entrée le nombre d'unités DataReg. L'additionneur ADD2 délivre donc en sortie, l'adresse physique en mémoire de la DataRegième case du tableau sélectionné, correspondant à la valeur courante du pointeur d'élément de référence relative (c'est-à-dire l'adresse physique courante en mémoire de l'étage de la pile contenant l'élément de référence relative) incrémentée du nombre d'unités DataReg.

**6.3 Description détaillée des moyens pour l'exécution d'instructions arithmétiques et/ou de manipulation de données spécifiques à l'invention**

On va décrire maintenant, en relation avec la figure 2, les moyens de gestion du pointeur de pile et les moyens de gestion des contenus des étages de la pile spécifiques à l'invention.

Dans le mode de réalisation illustré, les moyens de gestion du pointeur de pile comprennent :

- un premier multiplexeur M1 possédant trois entrées recevant respectivement : la valeur courante (StackPointer) du pointeur de pile, la valeur courante du pointeur de pile incrémentée d'une unité (StackPointer+1), et la valeur courante du pointeur de pile décrémentée d'une unité (StackPointer-1). Ce premier multiplexeur M1 délivre en sortie l'une des trois valeurs d'entrée, en fonction d'un premier signal de commande S1 prenant en compte le bilan sur la pile, +1, - 1 ou 0, de l'instruction courante. En d'autres termes, le premier multiplexeur M1 fournit la prochaine adresse physique en mémoire du premier étage Etage 0 de la pile ;

- un registre M2, dit troisième registre, contenant la valeur courante du pointeur de pile (c'est-à-dire l'adresse physique courante en mémoire du premier étage de la pile), et dont l'entrée est reliée à la sortie du premier multiplexeur M1. Ce troisième registre M2 est activé par un signal d'activation (En) indiquant qu'une instruction suivante est prête (NextInstrAck=1).

Pour gérer les contenus des étages de la pile, le dispositif de traitement comprend :

- des moyens de détermination de la prochaine adresse d'écriture AddWr dans la mémoire vive RAM. Ces moyens de détermination comprennent un deuxième multiplexeur M6 qui possède six entrées : la première entrée recevant la valeur courante (StackPointer) du pointeur de pile incrémentée du nombre d'unités DataReg (indiqué dans le mot d'opérande de l'instruction courante), la deuxième entrée recevant la valeur courante du pointeur de pile incrémentée d'une unité (StackPointer+1), la troisième entrée recevant la valeur courante du pointeur de pile incrémentée de deux unité (StackPointer+2), la quatrième entrée recevant la valeur courante du pointeur de pile décrémentée d'une unité (StackPointer-1), la cinquième entrée recevant la valeur TabRootPlusData, c'est-à-dire la valeur courante du pointeur d'élément de référence absolue incrémentée du nombre d'unités DataReg, et la sixième entrée recevant la valeur TabPreviousCellPlusData, c'est-à-dire la valeur courante du pointeur d'élément de référence relative incrémentée du nombre d'unités DataReg. Le deuxième multiplexeur M6 délivre en sortie l'une des valeurs d'entrée, en fonction d'un deuxième signal de commande S2 qui est fonction de l'instruction courante ;

- des moyens de détermination de la prochaine adresse de lecture AddrRd dans la mémoire vive RAM. Ces moyens de détermination comprennent un troisième multiplexeur M5 qui possède six entrées : la première entrée recevant la valeur courante du pointeur de pile incrémentée du nombre d'unités DataReg, la deuxième entrée recevant la valeur courante du pointeur de pile incrémentée d'une unité, la troisième entrée recevant la valeur courante du pointeur de pile incrémentée de deux unité, la quatrième entrée recevant la valeur courante du pointeur de pile décrémentée d'une unité, la cinquième entrée recevant la valeur TabRootPlusData, c'est-à-dire la valeur courante du pointeur d'élément de référence absolue incrémentée du nombre d'unités DataReg, et la sixième entrée recevant la valeur TabPreviousCellPlusData, c'est-à-dire la valeur courante du pointeur d'élément de référence relative incrémentée du nombre d'unités DataReg. Le troisième multiplexeur M5 délivre en sortie l'une des valeurs d'entrée, en fonction d'un troisième signal de commande S3 qui est fonction de l'instruction courante.

Il est important de noter que certaines instructions permettent de lire ou écrire une donnée n'importe où dans la pile. Les moyens de détermination de la prochaine adresse d'écriture AddWr ou de lecture AddrRd selon l'invention permettent avantageusement de calculer l'adresse physique à atteindre relativement à la valeur courante du pointeur de pile ;

- des moyens de détermination de la prochaine données à écrire dans la mémoire vive RAM. Ces moyens comprennent un quatrième multiplexeur M9 qui possède quatre entrées, recevant respectivement : le contenu courant (ValR1) du premier étage Etage 0 de la pile (c'est-à-dire le contenu du registre R1), le contenu courant (ValR2) du deuxième étage Etage 1 de la pile (c'est-à-dire le contenu du registre R2), une donnée SMDout lue dans la mémoire vive RAM lors de l'exécution de l'instruction courante, et une donnée ALUout calculée lors de l'exécution de l'instruction courante. Le quatrième multiplexeur M9 délivre en sortie l'une des valeurs d'entrée, en fonction d'un quatrième signal de commande S4 qui est fonction de l'instruction courante ;

- des moyens M21 de détermination des effets de bord de la mémoire cache permettant de déterminer si la valeur courante du pointeur d'élément de référence, absolue ou relative, incrémentée du nombre d'unités DataReg est une adresse physique, dans la mémoire vive, associée à :

  o un étage de la pile dont le contenu est stocké dans la mémoire vive RAM;
  o un étage de la pile dont le contenu est stocké dans la mémoire cache (MEM2) ;
  o un DataRegième étage de la pile dont le contenu est stocké dans la mémoire vive RAM.

Ces moyens M21 de détermination comprennent :

o un premier comparateur COMP1, permettant de faire une comparaison entre d'une part la valeur courante du pointeur d'élément de référence, absolue ou relative, incrémentée du nombre d'unités DataReg (TabRootPlusData ou TabPreviousCellPlusData, respectivement), et d'autre part la valeur courante du pointeur de pile (Stackpointer) ;

o un deuxième comparateur COMP2, permettant de faire une comparaison entre d'une part la valeur courante du pointeur d'élément de référence, absolue ou relative, incrémentée du nombre d'unités DataReg (TabRootPlusData ou TabPreviousCellPlusData, respectivement), et d'autre part la valeur courante du pointeur de pile incrémentée d'une unité (Stackpointer+1) ;

o un troisième comparateur COMP3, permettant de faire une comparaison entre d'une part la valeur courante du pointeur d'élément de référence, absolue ou relative, incrémentée du nombre d'unités DataReg (TabRootPlusData ou TabPreviousCellPlusData, respectivement), et d'autre part la valeur courante du pointeur de pile incrémentée de deux unités (Stackpointer+2).

Ces moyens M21 de détermination comprennent en outre un cinquième multiplexeur M28 qui possède deux entrées : la première entrée recevant la valeur courante du pointeur d'élément de référence absolue incrémentée du nombre d'unités DataReg (TabRootPlusData), et la seconde entrée recevant la valeur courante du pointeur d'élément de référence relative incrémentée du nombre d'unités DataReg (TabPreviousCellPlusData). Le cinquième multiplexeur M28 délivre en sortie l'une des valeurs d'entrée, en fonction d'un cinquième signal de commande S8 qui est fonction de l'instruction courante.

Il est important de noter que le tableau n'est pas relatif à la pile. En effet, sa référence est un pointeur physique. Les moyens de détermination des effets de bord de la mémoire cache testent si l'adresse physique de la case mémoire à accéder correspond à une donnée en cache ou dans l'espace mémoire RAM. Si la donnée est en cache, la donnée à l'adresse physique correspondante en mémoire n'est pas valide, du fait que l'on écrit les données en mémoire que lorsque celles-ci sortent du cache ;

- des moyens de détermination de la prochaine valeur à écrire dans la mémoire cache pour le contenu du premier étage. Ces moyens de détermination comprennent un sixième multiplexeur M7 qui possède six entrées : la première entrée recevant la valeur courante (ValR1) du contenu du premier étage Etage 0, la deuxième entrée recevant la valeur courante (ValR2) du contenu du deuxième étage Etage 1, la troisième entrée recevant la valeur DataReg, la quatrième entrée recevant la donnée SMDout, la cinquième entrée recevant la donnée ALUout et la sixième entrée recevant une valeur (GetCellRelOut) délivrée par des moyens M27 de rattrapage des effets de bord de la mémoire cache. Le sixième multiplexeur M7 délivre en sortie l'une des valeurs d'entrée, en fonction d'un sixième signal de commande S5 qui est fonction de l'instruction courante et/ou d'un septième signal de commande S9, délivré par les moyens M21 de détermination des effets de bord de la mémoire cache, qui indique si la valeur courante du pointeur d'élément de référence, absolue ou relative, incrémentée du nombre d'unités DataReg est égale à la valeur courante du pointeur de pile incrémentée d'une unité (Stackpointer+1).

Il est important de noter que la mémoire cache comprend un registre R1, dit quatrième registre, contenant la valeur courante (VALR1) du contenu du premier étage Etage 0. L'entrée du quatrième registre est reliée à la sortie du sixième multiplexeur M7. Ce quatrième registre est activé par un signal d'activation (En) indiquant que l'instruction suivante est prête (NextInstrAck=1) ;

- des moyens de détermination de la prochaine valeur à écrire dans la mémoire cache pour le contenu du deuxième étage Etage 1. Ces moyens de détermination comprennent un septième multiplexeur M8 qui possède trois entrées, recevant respectivement : la valeur courante du contenu du premier étage Etage 0, la valeur courante du contenu du deuxième étage Etage 1, et la donnée SMDout. Le septième multiplexeur M8 délivre en sortie l'une des valeurs d'entrée, en fonction de :

o le septième signal de commande S9 délivré par les moyens M21 de détermination des effets de bord de la mémoire cache ; et/ou

o un huitième signal de commande S6 qui est fonction de l'instruction courante ; et/ou

o un neuvième signal de commande S10, délivré par les moyens M21 de détermination des effets de bord de la mémoire cache, qui indique si la valeur courante du pointeur d'élément de référence, absolue ou relative, incrémentée du nombre d'unités DataReg est égale à la valeur courante du pointeur de pile incrémentée de deux unités (Stackpointer+2).

On note que la mémoire cache comprend un registre R2, dit cinquième registre, contenant la valeur courante (VALR2) du contenu du deuxième étage Etage 1. L'entrée du cinquième registre est reliée à la sortie du septième multiplexeur M8. Ce cinquième registre est activé par un signal d'activation (En) indiquant que l'instruction suivante est prête (NextInstrAck=1) ;

- des moyens de rattrapage des effets de bord de la mémoire cache. Ces moyens de rattrapage comprennent un huitième multiplexeur M27 qui possède trois entrées : la première entrée recevant la valeur courante (ValR1) du contenu du premier étage Etage 0, la deuxième entrée recevant la valeur courante (ValR2) du contenu du deuxième étage Etage 1, et la troisième entrée recevant la donnée SMDout. Le huitième multiplexeur M27 délivre en sortie l'une des valeurs d'entrée, en fonction de septième et dixième signaux de commande S9 et S11, délivrés par les moyens M21 de détermination des effets de bord de la mémoire cache. Le huitième multiplexeur M27 délivre en sortie, par exemple :

  o la valeur courante (ValR1) du contenu du premier étage Etage 0, si le dixième signal de commande S11 indique que la valeur courante du pointeur d'élément de référence, absolue ou relative, incrémentée du nombre d'unités est égale à la valeur courante du pointeur de pile (Stackpointer) ;
  o la valeur courante (ValR2) du contenu du deuxième étage Etage 1, si le septième signal de commande S9 indique que la valeur courante du pointeur d'élément de référence, absolue ou relative, incrémentée du nombre d'unités est égale à la valeur courante du pointeur de pile incrémentée d'une unité (Stackpointer+1);
  o la donnée SMDout, lue dans la mémoire vive lors de l'exécution de l'instruction courante, si les septième et dixième signaux de commande S9 et S11 indiquent ensemble que la valeur courante du pointeur d'élément de référence, absolue ou relative, incrémentée du nombre d'unités DataReg est égale à la valeur courante du pointeur de pile incrémentée de deux unités (Stackpointer+2).

Ces moyens de rattrapage des effets de bord de la mémoire cache sont utilisés lors de l'exécution des instructions « GETCELL » et « GETCELLREL », en conjonction des moyens M21 de détermination des effets de bord du cache. Lorsqu'on détecte qu'une case d'un tableau à lire est située en cache, alors la donnée à pousser dans la pile est la valeur du cache, et non celle provenant de la lecture de la mémoire RAM.

Dans une variante de réalisation, on peut adjoindre au huitième multiplexeur M27 une commande supplémentaire au moyen d'un signal généré par un décodeur d'instruction M0 (par exemple un « PLA », pour « Programmable Logic Array » en anglais). Afin d'optimiser la consommation électrique du dispositif de l'invention, on souhaite ne rendre actif le multiplexeur que lors de l'exécution des instructions « GETCELL » et « GETCELLREL ». Dans les cas d'exécution autres que les instructions « GETCELL » et « GETCELLREL », le multiplexeur restera dans sa position de repos, la sortie de ce multiplexeur n'étant alors pas utilisée.

Pour exécuter une opération, qui est fonction de l'instruction courante, le dispositif de traitement comprend en outre un bloc de calcul arithmétique M4, possédant deux entrées recevant respectivement : la valeur courante du contenu du premier étage Etage 0 et la valeur courante du contenu du deuxième étage Etage 1. Ce bloc de calcul arithmétique M4 délivre en sortie la donnée ALUout calculée avec un opérateur arithmétique, par exemple un additionneur, un soustracteur, un multiplieur, etc., sélectionné par un onzième signal de commande S7.

Comme illustré sur la figure 2, chaque signal de commande S1 à S8 est délivré par un décodeur d'instruction M0 qui traite l'instruction courante contenue dans le registre d'instruction RI.

## 6.4 Jeu d'instructions

On présente en annexe 1, des exemples d'instructions de manipulation de tableau exécutables par le dispositif de traitement selon l'invention. Cette annexe fait partie intégrante de la présente description.

## 6.4.1 Instruction CELLREPL(X)

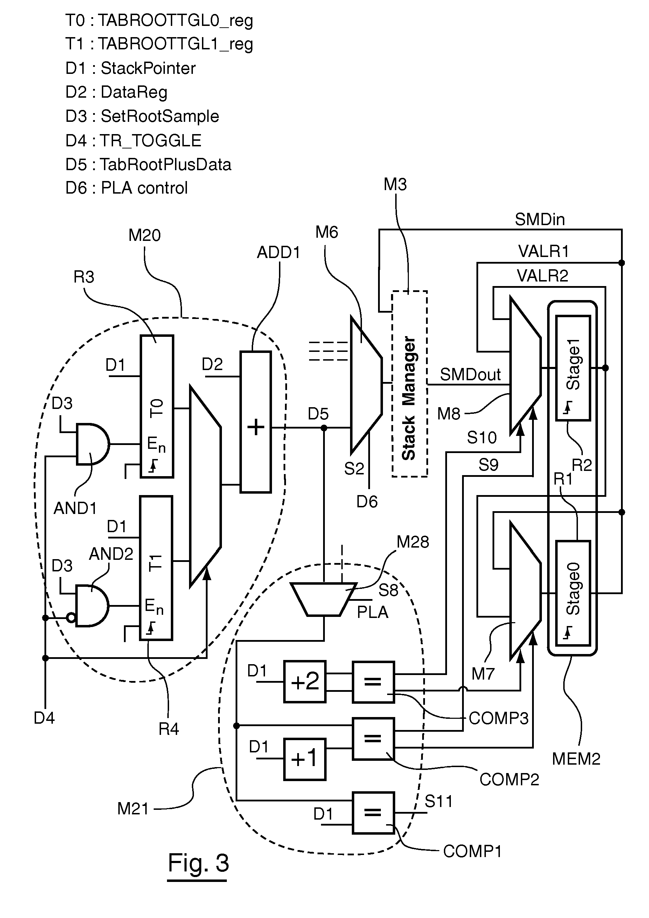

On va décrire maintenant, en relation avec la figure 3, la mise en oeuvre matérielle d'une instruction CELLREPL (X), en indiquant l'état ou l'action réalisée par chaque moyens M0 à M27 du dispositif de traitement selon l'invention.
Cette instruction permet de remplacer le Xième (DataRegième) élément d'un tableau (sélectionné par TR_TOGGLE), par rapport à un élément de référence absolue, par un élément contenu dans le premier étage de la pile Etage0 (R1). L'élément contenu dans le premier étage de la pile Etage0 (R1) est absorbé, le bilan sur la pile est donc de - 1.
L'instruction CELLREPL(X) est traduite par la séquence suivante :

M0 : décode l'instruction ;
M4 : état de repos (pas d'opération arithmétique, l'ALU n'est pas sélectionnée) ;
M7:

• si les moyens M21 de détermination des effets de bord du cache détectent que la DataRegième case du tableau est Etage1 (c'est-à-dire le deuxième étage de la pile implémenté dans R2), alors M7 sélectionne Etage0 (R1) ;

- si les moyens M21 de détermination des effets de bord du cache détectent que la DataRegième case du tableau n'est pas Etage1 (R2), alors M7 sélectionne Etage1 (R2) ;

M1 : sélectionne l'entrée correspondant à StackPointer+1 (bilan -1 sur la pile) ;

M2 : se réactualise au coup d'horloge suivant, si l'entrée enable du registre est à « 1 » (NextInstrAck=1) ;

M5 : sélectionne l'entrée correspondant à StackPointer+2 (on va lire la donnée qui va rentrer dans Etage1 (R2));

M20 : calcule l'adresse physique de la DataRegième case du tableau sélectionné par TR_TOGGLE;

M6 : sélectionne la sortie des moyens M20, c'est-à-dire l'adresse physique de la DataRegième case du tableau sélectionné par TR_TOGGLE;

M21 : teste si la DataRegième case du tableau sélectionné par TR_TOGGLE est Etage1 ou Etage2 pour affecter la mise à jour de Etage0 (R1) et Etage1 (R2) ;

M9 : état de repos ;

M0: positionne les entrées memory enable « Me » et write enable « We » de M3 à « 1 » et « 0 », respectivement, il y aura donc une lecture de la future valeur de Etage1 (R2);

M8 : (il est important de noter que les sélections suivantes sont réalisées pour le cas de l'instruction CELLREPL)

- si le comparateur d'égalité à « StackPointer+1 » de M21 présente « 1 » en sortie, alors M8 sélectionne l'entrée SMDout ;
- si le comparateur d'égalité à « StackPointer+2 » de M21 présente « 1 » en sortie, alors M8 sélectionne l'entrée ValR2 (R2) ;
- si aucun des comparateurs d'égalité à « StackPointer+1 » et à « StackPointer+2 » n'est à « 1 », alors M8 sélectionne l'entrée SMDout ;

M21 : le multiplexeur d'entrée des comparateurs sélectionne TabRootPlusData.

### 6.4.2 Instruction GETCELLREL(X)

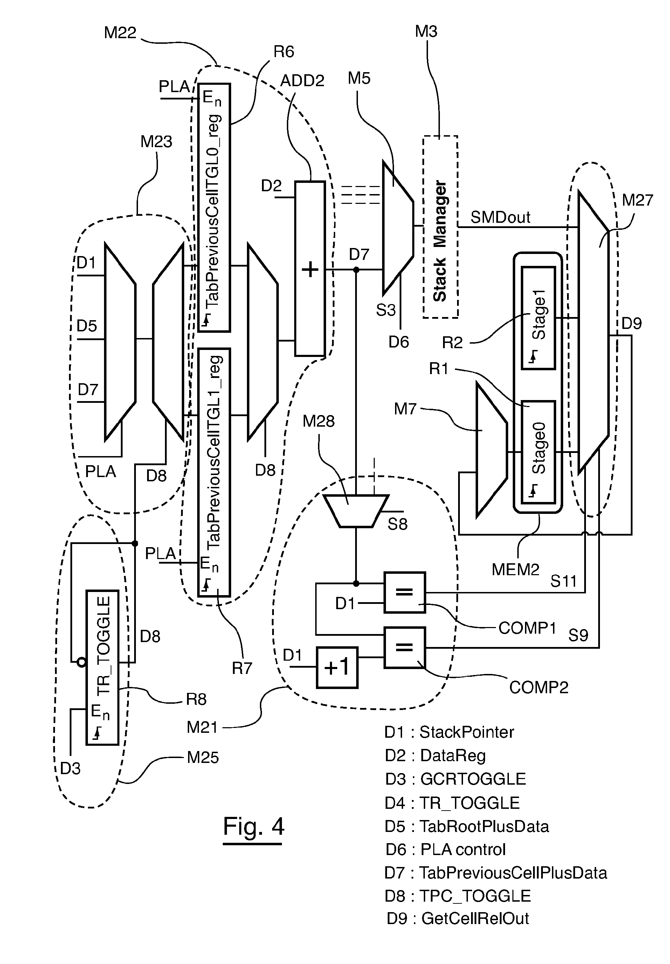

On va décrire maintenant, en relation avec la **figure 4**, la mise en oeuvre matérielle d'une instruction GETCELLREL(X), en indiquant l'état ou l'action réalisée par chaque moyens M0 à M27 du dispositif de traitement selon l'invention.

Cette instruction permet d'insérer dans le premier étage de la pile le Xième élément d'un tableau (sélectionné par ROOTTOGGLE), par rapport à un élément de référence relative, c'est-à-dire suivant le dernier élément précédemment accédé. On note qu'à chaque nouvel accès, le pointeur physique contenant l'adresse de la dernière case du tableau accédé est remis à jour. Le bilan sur la pile est de 1.

Cette instruction GETCELLREL(X) est traduite par la séquence suivante :

M0 : décode l'instruction ;

M4 : état de repos (pas d'opération arithmétique, l'ALU n'est pas sélectionnée) ;

M7 : sélectionne la sortie des moyens de rattrapage des effets de bord du cache, nommée GetCellRelOut ;

M1 : sélectionne l'entrée correspondant à StackPointer-1 (bilan +1 sur la pile) ;

M2 : se réactualise au coup d'horloge suivant, si l'entrée enable du registre est à « 1 » (NextInstrAck=1) ;

M5 : sélectionne l'entrée correspondant à la sortie des moyens M22 de détermination de l'adresse physique de la TPCième case du tableau sélectionné par TPC_TOGGLE: TabPreviousCellTGLx_reg+DataReg (cette adresse est relative à StackPointer);

M6 : sélectionne l'entrée StackPointer+1, la case physique correspondant à Etage 1 dans le plan mémoire doit être mis à jour avec la donnée ValR2 du registre R2 qui, quant à lui, va être mise à jour avec l'ancienne valeur ValR1 du registre R1;

M9: état de repos ;

M0: positionne les entrées memory enable « Me » et write enable « We » de M3 à « 1 », il y aura donc une lecture à l'adresse sélectionnée par M5 et une écriture à l'adresse sélectionnée par M6 ;

M8 : sélectionne l'entrée ValR1 (R1) ;

M23 : met à jour le registre TabPreviousCellTGLx_reg avec la valeur TabPreviousCellTGLx_reg+DataReg ;

M21 : le multiplexeur d'entrée des comparateurs sélectionne TabPreviousCellPlusData ;

M27 :

- si le comparateur d'égalité à « StackPointer » de M21 présente « 1 » en sortie, alors M27 sélectionne l'entrée ValR1 (R1) ;

- si le comparateur d'égalité à « StackPointer+1 » de M21 présente « 1 » en sortie, alors M27 sélectionne l'entrée ValR2 (R2) ;
- si aucun des comparateurs d'égalité à « StackPointer » et à « StackPointer+1 » n'est à « 1 », alors M27 sélectionne l'entrée SMDout.

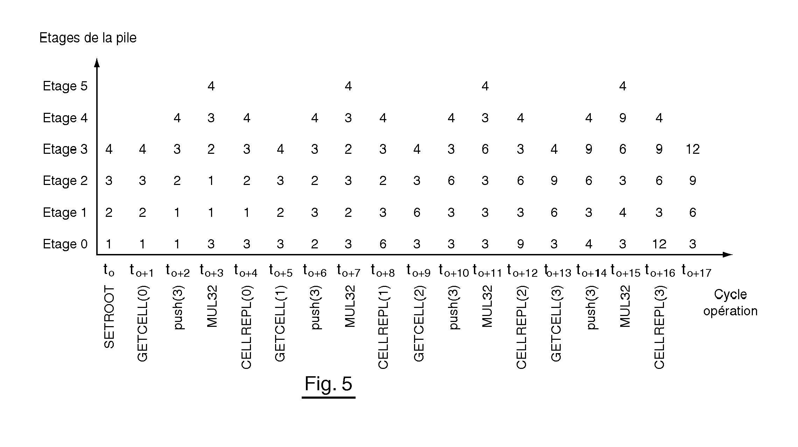

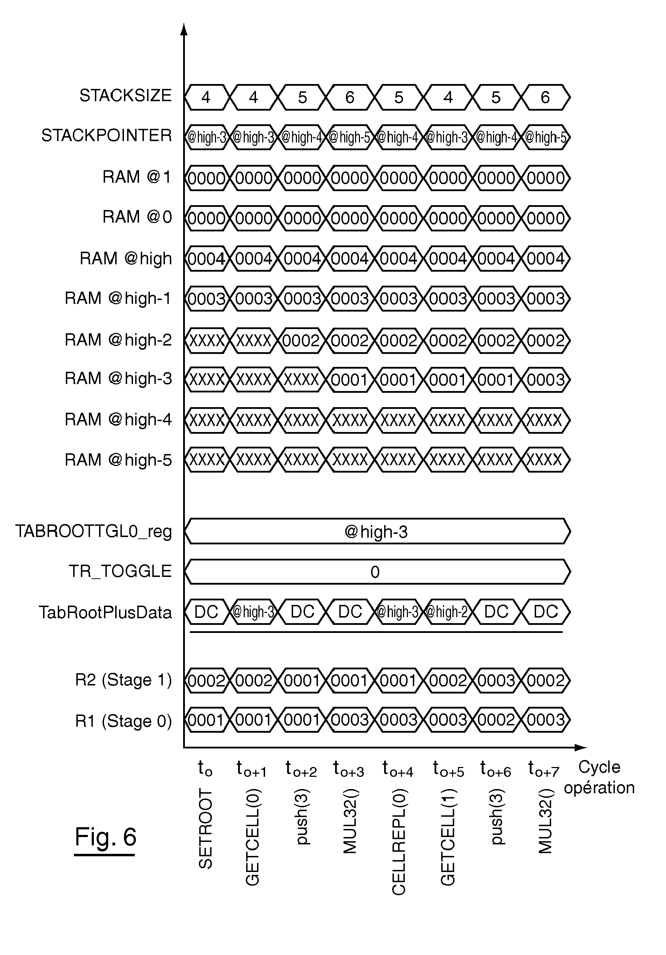

### 6.5 Discussion d'un exemple de l'évolution d'une pile LIFO (figure 5), d'un plan mémoire et des registres de calcul (figure 6)

La figure 5 illustre un exemple de l'évolution d'une pile LIFO d'un dispositif de traitement selon l'invention, pour un cas particulier de calcul matriciel selon le principe de la notation polonaise inversée. On rappelle que la structure d'une pile LIFO repose sur le principe que la dernière donnée ajoutée à la structure sera ainsi la première à être retirée. Comme on le verra par la suite, le bilan d'une instruction sur la pile est soit nul, soit de 1, soit de -1.

Dans ce cas particulier, on veut effectuer l'opération matricielle :

$$\begin{bmatrix} 1 \\ 2 \\ 3 \\ 4 \end{bmatrix} \times 3 = \begin{bmatrix} 3 \\ 6 \\ 9 \\ 12 \end{bmatrix}$$

On présente en annexe 2, un exemple de programme en langage C permettant de mettre en oeuvre l'opération matricielle précitée. Cette annexe fait partie intégrante de la présente description.

Comme illustré sur la figure 5, cette opération matricielle est traduite par la séquence suivante : (on suppose qu'à l'instant t0, les premier, deuxième, troisième et quatrième étages de la pile, notés Etage 0, Etage 1, Etage 2 et Etage 3, respectivement, sont chargés avec les valeurs « 1 », « 2 », « 3 » et « 4 », respectivement)

- à l'instant t0, on génère une instruction « SETROOT ». Cette instruction permet de définir la racine d'un tableau, en d'autres termes, elle permet de définir un élément de référence absolue parmi les éléments d'un tableau donné ;
- à l'instant t0+1, on exécute l'instruction « SETROOT » (le bilan est de 0), le tableau à une dimension « [1 2 3 4] » est alors défini et a pour élément de référence l'élément positionné en bas de pile, c'est-à-dire la valeur « 1 » sur Etage 0. A ce même instant t0+1, on génère une instruction « GETCELL(x) ». Cette instruction permet d'insérer en bas de pile (Etage 0) l'élément du tableau stocké sur le xième étage de la pile par rapport à l'étage contenant l'élément de référence. Comme on le verra par la suite, pour x=0 (GETCELL(0)), on insère en bas de pile (Etage 0) l'élément du tableau stocké sur le 0ième étage de la pile par rapport à l'étage contenant l'élément de référence, c'est-à-dire qu'on insère sur Etage 0 l'élément de référence lui-même ;
- à l'instant t0+2, on exécute l'instruction « GETCELL(0) », la valeur « 1 » (c'est-à-dire l'élément stocké sur « Etage 0 + 0 », soit Etage 0) est alors empilée sur Etage 0 (le bilan est de 1) et les déplacements suivants sont effectués (du fait qu'on a inséré la valeur « 1 » dans la pile) :

    o la valeur « 1 » est déplacée depuis Etage 0 vers Etage 1;
    o la valeur « 2 » est déplacée depuis Etage 1 vers Etage 2;
    o la valeur « 3 » est déplacée depuis Etage 2 vers Etage 3; et
    o la valeur « 4 » est déplacée depuis Etage 3 vers le cinquième étage de la pile, noté Etage 4.

    On note qu'à cet instant t0+2, l'élément de référence (« 1 ») est sur Etage 1. A ce même instant t0+2, on génère une instruction « push 3 » ;
- à l'instant t0+3, on exécute l'instruction « push 3 », la valeur « 3 » est alors empilée sur Etage 0 (le bilan est de 1) et les déplacements suivants sont effectués (du fait qu'on a poussé la valeur « 3 » dans la pile) :

    o la valeur « 1 » est déplacée depuis Etage 0 vers Etage 1 ;
    o la valeur « 1 » est déplacée depuis Etage 1 vers Etage 2 ;
    o la valeur « 2 » est déplacée depuis Etage 2 vers Etage 3 ;
    o la valeur « 3 » est déplacée depuis Etage 3 vers Etage 4 ; et
    o la valeur « 4 » est déplacée depuis Etage 4 vers le sixième étage de la pile, noté Etage 5.

    On note qu'à cet instant t0+3, l'élément de référence (« 1 ») est sur Etage 2. A ce même instant t0+3, on génère une instruction « MUL32 » correspondant à une multiplication des valeurs situées sur les Etages 1 et 0 ;

- à l'instant t0+4, on exécute l'instruction « MUL32 », la valeur « 1 » sur Etage 1 est alors multipliée par la valeur « 3 » sur Etage 0, et le résultat de cette multiplication, c'est-à-dire la valeur « 3 », est stocké sur Etage 0 (le bilan est de -1). Les déplacements suivants sont ensuite effectués (du fait qu'on a absorbé les valeurs « 1 » et « 3 ») :

 o la valeur « 1 » est déplacée depuis Etage 2 vers Etage 1 ;
 o la valeur « 2 » est déplacée depuis Etage 3 vers Etage 2 ;
 o la valeur « 3 » est déplacée depuis Etage 4 vers Etage 3 ; et
 o la valeur « 4 » est déplacée depuis Etage 5 vers Etage 4.

On note qu'à cet instant t0+4, l'élément de référence (« 1 ») est sur Etage 1. A ce même instant t0+4, on génère une instruction « CELLREPL(x) ». Cette instruction permet de remplacer l'élément du tableau stocké sur le xième étage de la pile par rapport à l'étage contenant l'élément de référence par l'élément positionné en bas de pile (Etage 0). Comme on le verra par la suite, pour x=0 (CELLREPL(0)), on remplace l'élément de référence par l'élément positionné en bas de pile (Etage 0) ;

- à l'instant t0+5, on exécute l'instruction « CELLREPL(0) », la valeur « 1 » sur Etage 1 (c'est-à-dire l'élément stocké sur « Etage 1 + 0 ») est remplacée par la valeur « 3 » sur Etage 0 (le bilan est de -1) et les déplacements suivants sont effectués (du fait qu'on a absorbé la valeur « 1 ») :

 o la valeur « 2 » est déplacée depuis Etage 2 vers Etage 1;
 o la valeur « 3 » est déplacée depuis Etage 3 vers Etage 2; et
 o la valeur « 4 » est déplacée depuis Etage 4 vers Etage 3.

Il est important de noter qu'à cet instant t0+5, l'élément de référence est sur Etage 0, soit la valeur « 3 ». A ce même instant t0+5, on génère une instruction « GETCELL(1) » ;

- à l'instant t0+6, on exécute l'instruction « GETCELL(1) », la valeur « 2 » (c'est-à-dire l'élément stocké sur « Etage 0 + 1 », soit Etage 1) est alors empilée sur Etage 0 (le bilan est de 1) et les déplacements suivants sont effectués (du fait qu'on a inséré la valeur « 2 » en bas de pile) :

 o la valeur « 3 » est déplacée depuis Etage 0 vers Etage 1 ;
 o la valeur « 2 » est déplacée depuis Etage 1 vers Etage 2 ;
 o la valeur « 3 » est déplacée depuis Etage 2 vers Etage 3 ; et
 o la valeur « 4 » est déplacée depuis Etage 3 vers Etage 4.

On note qu'à cet instant t0+6, l'élément de référence (« 3 ») est sur Etage 1. A ce même instant t0+6, on génère une instruction « push 3 » ;

- à l'instant t0+7, on exécute l'instruction « push 3 », la valeur « 3 » est alors empilée sur Etage 0 (le bilan est de 1) et les déplacements suivants sont effectués (du fait qu'on a poussé la valeur « 3 » dans la pile) :

 o la valeur « 2 » est déplacée depuis Etage 0 vers Etage 1 ;
 o la valeur « 3 » est déplacée depuis Etage 1 vers Etage 2 ;
 o la valeur « 2 » est déplacée depuis Etage 2 vers Etage 3 ;
 o la valeur « 3 » est déplacée depuis Etage 3 vers Etage 4 ; et
 o la valeur « 4 » est déplacée depuis Etage 4 vers Etage 5.

On note qu'à cet instant t0+7, l'élément de référence (« 3 ») est sur Etage 2. A ce même instant t0+7, on génère une instruction « MUL32 » correspondant à une multiplication des valeurs situées sur les Etages 1 et 0 ;

- à l'instant t0+8, on exécute l'instruction « MUL32 », la valeur « 2 » sur Etage 1 est alors multipliée par la valeur « 3 » sur Etage 0, et le résultat de cette multiplication, c'est-à-dire la valeur « 6 », est stocké sur Etage 0 (le bilan est de -1). Les déplacements suivants sont ensuite effectués (du fait qu'on a absorbé les valeurs « 2 » et « 3 ») :

 o la valeur « 3 » est déplacée depuis Etage 2 vers Etage 1 ;
 o la valeur « 2 » est déplacée depuis Etage 3 vers Etage 2 ;
 o la valeur « 3 » est déplacée depuis Etage 4 vers Etage 3 ; et
 o la valeur « 4 » est déplacée depuis Etage 5 vers Etage 4.

On note qu'à cet instant t0+8, l'élément de référence (« 3 ») est sur Etage 1. A ce même instant t0+8, on génère une instruction « CELLREPL(1) » ;

- à l'instant t0+9, on exécute l'instruction « CELLREPL(1) », la valeur « 2 » sur Etage 2 (c'est-à-dire l'élément stocké sur « Etage 1 + 1 ») est remplacée par la valeur « 6 » sur Etage 0 (le bilan est de -1) et les déplacements suivants sont effectués (du fait qu'on a absorbé la valeur « 2 ») :

> o la valeur « 3 » est déplacée depuis Etage 1 vers Etage 0;
> o la valeur « 6 » est déplacée depuis Etage 2 vers Etage 1;
> o la valeur « 3 » est déplacée depuis Etage 3 vers Etage 2; et
> o la valeur « 4 » est déplacée depuis Etage 4 vers Etage 3.

Il est important de noter qu'à cet instant t0+9, l'élément de référence est sur Etage 0, soit la valeur « 3 ». A ce même instant t0+9, on génère une instruction « GETCELL(2) » ;

- à l'instant t0+10, on exécute l'instruction « GETCELL(2) », la valeur « 3 » (c'est-à-dire l'élément stocké sur « Etage 0 + 2 », soit Etage 2) est alors empilée sur Etage 0 (le bilan est de 1) et les déplacements suivants sont effectués (du fait qu'on a inséré la valeur « 3 » en bas de pile):

> o la valeur « 3 » est déplacée depuis Etage 0 vers Etage 1;
> o la valeur « 6 » est déplacée depuis Etage 1 vers Etage 2;
> o la valeur « 3 » est déplacée depuis Etage 2 vers Etage 3; et
> o la valeur « 4 » est déplacée depuis Etage 3 vers Etage 4.

On note qu'à cet instant t0+10, l'élément de référence (« 3 ») est sur Etage 1. A ce même instant t0+10, on génère une instruction « push 3 » ;

- à l'instant t0+11, on exécute l'instruction « push 3 », la valeur « 3 » est alors empilée sur Etage 0 (le bilan est de 1) et les déplacements suivants sont effectués (du fait qu'on a poussé la valeur « 3 » dans la pile) :

> o la valeur « 3 » est déplacée depuis Etage 0 vers Etage 1;
> o la valeur « 3 » est déplacée depuis Etage 1 vers Etage 2;
> o la valeur « 6 » est déplacée depuis Etage 2 vers Etage 3;
> o la valeur « 3 » est déplacée depuis Etage 3 vers Etage 4; et
> o la valeur « 4 » est déplacée depuis Etage 4 vers Etage 5.

On note qu'à cet instant t0+11, l'élément de référence (« 3 ») est sur Etage 2. A ce même instant t0+11, on génère une instruction « MUL32 » correspondant à une multiplication des valeurs situées sur les Etages 1 et 0 ;

- à l'instant t0+12, on exécute l'instruction « MUL32 », la valeur « 3 » sur Etage 1 est alors multipliée par la valeur « 3 » sur Etage 0, et le résultat de cette multiplication, c'est-à-dire la valeur « 9 », est stocké sur Etage 0 (le bilan est de -1). Les déplacements suivants sont ensuite effectués (du fait qu'on a absorbé les valeurs « 3 » et « 3 ») :

> o la valeur « 3 » est déplacée depuis Etage 2 vers Etage 1 ;
> o la valeur « 6 » est déplacée depuis Etage 3 vers Etage 2 ;
> o la valeur « 3 » est déplacée depuis Etage 4 vers Etage 3 ; et
> o la valeur « 4 » est déplacée depuis Etage 5 vers Etage 4.

On note qu'à cet instant t0+12, l'élément de référence (« 3 ») est sur Etage 1. A ce même instant t0+12, on génère une instruction « CELLREPL(2) » ;

- à l'instant t0+13, on exécute l'instruction « CELLREPL(2) », la valeur « 3 » sur Etage 3 (c'est-à-dire l'élément stocké sur « Etage 1 + 2 ») est remplacée par la valeur « 9 » sur Etage 0 (le bilan est de -1) et les déplacements suivants sont effectués (du fait qu'on a absorbé la valeur « 3 ») :

> o la valeur « 3 » est déplacée depuis Etage 1 vers Etage 0 ;
> o la valeur « 6 » est déplacée depuis Etage 2 vers Etage 1 ;
> o la valeur « 9 » est déplacée depuis Etage 3 vers Etage 2 ; et
> o la valeur « 4 » est déplacée depuis Etage 4 vers Etage 3.

Il est important de noter qu'à cet instant t0+13, l'élément de référence est sur Etage 0, soit la valeur « 3 ». A ce même instant t0+13, on génère une instruction « GETCELL(3) » ;

- à l'instant t0+14, on exécute l'instruction « GETCELL(3) », la valeur « 4 » (c'est-à-dire l'élément stocké sur « Etage 0 + 3 », soit Etage 3) est alors empilée sur Etage 0 (le bilan est de 1) et les déplacements suivants sont effectués (du fait qu'on a inséré la valeur « 4 » en bas de pile) :

o la valeur « 3 » est déplacée depuis Etage 0 vers Etage 1 ;
o la valeur « 6 » est déplacée depuis Etage 1 vers Etage 2 ;
o la valeur « 9 » est déplacée depuis Etage 2 vers Etage 3 ; et
o la valeur « 4 » est déplacée depuis Etage 3 vers Etage 4.

On note qu'à cet instant t0+14, l'élément de référence (« 3 ») est sur Etage 1. A ce même instant t0+14, on génère une instruction « push 3 » ;

- à l'instant t0+15, on exécute l'instruction « push 3 », la valeur « 3 » est alors empilée sur Etage 0 (le bilan est de 1) et les déplacements suivants sont effectués (du fait qu'on a poussé la valeur « 3 » dans la pile) :

o la valeur « 4 » est déplacée depuis Etage 0 vers Etage 1 ;
o la valeur « 3 » est déplacée depuis Etage 1 vers Etage 2 ;
o la valeur « 6 » est déplacée depuis Etage 2 vers Etage 3 ;
o la valeur « 9 » est déplacée depuis Etage 3 vers Etage 4 ; et
o la valeur « 4 » est déplacée depuis Etage 4 vers Etage 5.

On note qu'à cet instant t0+15, l'élément de référence (« 3 ») est sur Etage 2. A ce même instant t0+15, on génère une instruction « MUL32 » correspondant à une multiplication des valeurs situées sur les Etages 1 et 0 ;

- à l'instant t0+16, on exécute l'instruction « MUL32 », la valeur « 4 » sur Etage 1 est alors multipliée par la valeur « 3 » sur Etage 0, et le résultat de cette multiplication, c'est-à-dire la valeur « 12 », est stocké sur Etage 0 (le bilan est de -1). Les déplacements suivants sont ensuite effectués (du fait qu'on a absorbé les valeurs « 4 » et « 3 ») :

o la valeur « 3 » est déplacée depuis Etage 2 vers Etage 1 ;
o la valeur « 6 » est déplacée depuis Etage 3 vers Etage 2 ;
o la valeur « 9 » est déplacée depuis Etage 4 vers Etage 3 ; et
o la valeur « 4 » est déplacée depuis Etage 5 vers Etage 4.

On note qu'à cet instant t0+16, l'élément de référence (« 3 ») est sur Etage 1. A ce même instant t0+16, on génère une instruction « CELLREPL(3) » ;

- à l'instant t0+17, on exécute l'instruction « CELLREPL(3) », la valeur « 4 » sur Etage 4 (c'est-à-dire l'élément stocké sur « Etage 1 + 3 ») est remplacée par la valeur « 12 » sur Etage 0 (le bilan est de -1) et les déplacements suivants sont effectués (du fait qu'on a absorbé la valeur « 4 ») :

o la valeur « 3 » est déplacée depuis Etage 1 vers Etage 0 ;
o la valeur « 6 » est déplacée depuis Etage 2 vers Etage 1 ;
o la valeur « 9 » est déplacée depuis Etage 3 vers Etage 2 ; et
o la valeur « 12 » est déplacée depuis Etage 4 vers Etage 3.

L'opération matricielle précitée a donc pour résultat le tableau à une dimension « [3 6 9 12] ».

La **figure 6** est une représentation d'un exemple de l'évolution du plan mémoire RAM et des registres R1 et R2 d'un dispositif de traitement selon l'invention.

En abscisse, on a représenté le cycle opération (c'est-à-dire une série d'instructions) et en ordonnée les informations suivantes :

- STACKSIZE, indiquant la taille courante de la pile (c'est-à-dire le nombre d'éléments dans la pile à l'instant courant) ;
- STACKPOINTER, indiquant la valeur courante du pointeur de pile, c'est-à-dire l'adresse physique courante dans le plan mémoire RAM du premier étage de la pile R1 ;
- RAM @1 à RAM @high-5, représentant les adresses physiques du plan mémoire RAM ;
- TR_TOGGLE, indiquant le tableau en accès absolu sur lequel on travaille à l'instant courant. Il est important de noter que, dans l'exemple de la figure 6 (TR_TOGGLE=0), on travaille sur le premier tableau en accès absolu ;
- Tabroottgl0_reg, indiquant la valeur courante du pointeur d'élément de référence absolue (pour le premier tableau en accès absolu), c'est-à-dire l'adresse physique courante dans le plan mémoire RAM de l'étage de la pile contenant l'élément de référence absolue. Il est important de noter que, dans l'exemple de la figure 6 (Tabroottgl0_reg=RAM @high-3), l'étage de la pile contenant l'élément de référence absolue a pour adresse physique, l'adresse RAM @high-3 ;
- TabRootPlusData, indiquant la valeur courante du pointeur d'élément de référence absolue incrémentée du nombre d'unités DataReg, c'est-à-dire l'adresse physique dans le plan mémoire RAM de l'étage de la pile contenant le DataRegième élément du premier tableau en accès absolu à partir de l'élément de référence absolue. Il est important de noter que si l'instruction courante n'est pas une instruction de manipulation de tableau, en d'autres termes, si l'instruction courante est une instruction arithmétique ou de manipulation de donnée, alors la valeur prise par TabRootPlusData, notée « DC » (pour « Don't Care » en anglais), n'est pas importante, en ce sens qu'elle n'intervient pas lors de l'exécution de l'instruction courante ;

- R1 et R2, représentant les premier et deuxième étages de la pile, respectivement.

Dans cet exemple, on veut effectuer l'opération matricielle, déjà commentée en relation avec la figure 5, à savoir :

$$\begin{bmatrix} 1 \\ 2 \\ 3 \\ 4 \end{bmatrix} \times 3 = \begin{bmatrix} 3 \\ 6 \\ 9 \\ 12 \end{bmatrix}$$

Par souci de simplification de la description, on se limitera, dans toute la suite de ce document, à décrire les huit premières instructions (du cycle opération relatif à l'opération matricielle précitée) exécutées par le dispositif de traitement selon l'invention (dispositif de traitement en notation polonaise inversée implémenté de manière matérielle). L'Homme du Métier étendra sans difficulté cet enseignement aux autres instructions du cycle opération relatif à l'opération matricielle précitée.

Comme illustré sur la figure 6, cette opération matricielle est traduite par la séquence suivante : (on suppose qu'à l'instant t0, les premier, deuxième, troisième et quatrième étages de la pile sont chargés avec les valeurs « 1 », « 2 », « 3 » et « 4 », respectivement)

- à l'instant t0, on génère une instruction « SETROOT ». Cette instruction n'a pas besoin de l'information TabRoot-PlusData (TabRootPlusData=DC) lors de son exécution, du fait que cette instruction est destinée à la définition de tableau et non la manipulation d'élément de tableau. On note qu'à cet instant t0, les informations STACKSIZE=4 et STACKPOINTER=RAM @high-3 indiquent respectivement que la pile contient quatre éléments et que le premier élément de la pile est stocké à l'adresse physique RAM @high-3.
- à l'instant t0+1, on exécute l'instruction « SETROOT » (le bilan sur la pile est de 0, STACKSIZE=4, il y a quatre éléments dans la pile), le tableau à une dimension « [1 2 3 4] » est alors défini et a pour élément de référence absolue l'élément positionné à l'adresse RAM @high-3 (Tabroottgl0_reg=RAM @high-3), c'est-à-dire le contenu du premier étage de la pile R1, soit la valeur « 1 ». En effet, à cet instant STACKPOINTER pointe l'adresse RAM @high-3. A ce même instant t0+1, on génère une instruction « GETCELL(0) ». Comme on le verra ci-après, cette instruction permet d'insérer en bas de pile (R1) l'élément du tableau stocké à l'adresse RAM @high-3 (TabRoot-PlusData=RAM @high-3), soit le contenu de R1 « 1 ».
- à l'instant t0+2, on exécute l'instruction « GETCELL(0) », la valeur « 1 » (c'est-à-dire l'élément stocké (à t0+1) à l'adresse RAM @high-3) est alors empilée sur R1 (le bilan sur la pile est de 1, STACKSIZE=5, il y a cinq éléments dans la pile), le contenu de R1 « 1 » est déplacé vers R2, et le contenu de R2 « 2 » est déplacé dans le plan mémoire à l'adresse RAM @high-2. Les premier et deuxième étages de la pile R1 et R2 ont pour adresse physique, les adresses RAM @high-4 et RAM @high-3, respectivement. En effet, à cet instant STACKPOINTER pointe l'adresse RAM @high-4. On note que les contenus stockés aux adresses RAM @1, @0 , @high et @high-1 ne sont pas modifiés. A ce même instant t0+2, on génère une instruction « push 3 ». Comme déjà indiqué, pour une instruction arithmétique, TabRootPlusData=DC ;
- à l'instant t0+3, on exécute l'instruction « push 3 », la valeur « 3 » est alors empilée sur R1 (le bilan sur la pile est de 1, STACKSIZE=6, il y a six éléments dans la pile), le contenu de R1 « 1 » est déplacé vers R2, et le contenu de R2 « 1 » est déplacé dans le plan mémoire à l'adresse RAM @high-3. Les premier et deuxième étages de la pile R1 et R2 ont pour adresse physique, les adresses RAM @high-5 et RAM @high-4, respectivement. En effet, à cet instant STACKPOINTER pointe l'adresse RAM @high-5. On note que les contenus stockés aux adresses RAM @1, @0 , @high, @high-1 et @high-2 ne sont pas modifiés. A ce même instant t0+3, on génère une instruction « MUL32 ». Comme déjà indiqué, pour une instruction arithmétique, TabRootPlusData=DC ;
- à l'instant t0+4, on exécute l'instruction « MUL32 », le contenu de R2 « 1 » est alors multiplié par le contenu de R1 « 3 », et le résultat de cette multiplication « 3 » est stocké sur R1. A cet instant t0+4, STACKPOINTER pointe l'adresse RAM @high-4, les premier et deuxième étages de la pile R1 et R2 ont alors pour adresse physique, les adresses RAM @high-4 et RAM @high-3, respectivement. R2 étant vide (son contenu ayant été absorbé), il se charge avec le contenu « 1 » stocké à l'adresse RAM @high-3 (le bilan sur la pile est de -1, STACKSIZE=5). A ce même instant t0+4, on génère une instruction « CELLREPL(0) ». Comme on le verra ci-après, cette instruction permet de remplacer l'élément du tableau stocké à l'adresse RAM @high-3 (TabRootPlusData=RAM @high-3), soit le contenu de R2 « 1 », par l'élément positionné en bas de pile, soit le contenu de R1 « 3 ».

- à l'instant t0+5, on exécute l'instruction « CELLREPL(0) », le contenu de R2 « 1 » est alors remplacé par le contenu de R1 « 3 ». R1 étant vide (son contenu ayant été déplacé), la pile redescend d'un étage (le bilan sur la pile est de -1, STACKSIZE=4) et R1 se charge avec le contenu de R2 « 3 ». A cet instant t0+5, STACKPOINTER pointe l'adresse RAM @high-3, les premier et deuxième étages de la pile R1 et R2 ont alors pour adresse physique, les adresses RAM @high-3 et RAM @high-2, respectivement. R2 étant vide (son contenu étant retombé en bas de pile (R1)), il se charge avec le contenu « 2 » stocké à l'adresse RAM @high-2. A ce même instant t0+5, on génère une instruction « GETCELL(1) ». Comme on le verra ci-après, cette instruction permet d'insérer en bas de pile (R1) l'élément du tableau stocké à l'adresse RAM @high-2 (TabRootPlusData=RAM @high-2), soit le contenu de R2 « 2 ».
- à l'instant t0+6, on exécute l'instruction « GETCELL(1) », la valeur « 2 » (c'est-à-dire l'élément stocké à l'adresse RAM @high-2) est alors empilée sur R1 (le bilan sur la pile est de 1, STACKSIZE=5), le contenu de R1 « 3 » est déplacé vers R2, et le contenu de R2 « 2 » est déplacé dans le plan mémoire à l'adresse RAM @high-2. Les premier et deuxième étages de la pile R1 et R2 ont pour adresse physique, les adresses RAM @high-4 et RAM @high-3, respectivement. En effet, à cet instant STACKPOINTER pointe l'adresse RAM @high-4. A ce même instant t0+6, on génère une instruction « push 3 ». Comme déjà indiqué, pour une instruction arithmétique, TabRootPlusData=DC ;
- à l'instant t0+7, on exécute l'instruction « push 3 », la valeur « 3 » est alors empilée sur R1 (le bilan sur la pile est de 1, STACKSIZE=6), le contenu de R1 « 2 » est déplacé vers R2, et le contenu de R2 « 3 » est déplacé dans le plan mémoire à l'adresse RAM @high-3. Les premier et deuxième étages de la pile R1 et R2 ont pour adresse physique, les adresses RAM @high-5 et RAM @high-4, respectivement. En effet, à cet instant STACKPOINTER pointe l'adresse RAM @high-5. A ce même instant t0+7, on génère une instruction « MUL32 ». Comme déjà indiqué, pour une instruction arithmétique, TabRootPlusData=DC.

## ANNEXE 1 : Instructions de manipulation de tableau

Le tableau ci-après récapitule les différentes instructions de manipulation de tableau. La première colonne du tableau indique le nom de l'instruction, la deuxième colonne précise l'argument (opérande), la troisième décrit l'opération arithmétique à effectuer et la dernière indique le bilan sur la pile.

| MANIPULATION DE TABLEAUX | | | |
|---|---|---|---|
| SETROOT | none | if TR_TOGGLE = 0 then TABROOTTGL0_reg <= SP else TABROOTTGL1_reg <= SP | 0 |
| ROOTTOGGLE | none | TR_TOGGLE <= !TR_TOGGLE 0 initial value is 0 | 0 |
| CELLREPL(x) | 12 bits | if TR_TOGGLE=0 then S(TABROOTTGL0_reg+x) <= S0 else S(TABROOTTGL1_reg+x) <= S0 end drops data | -1 |
| GETCELL(x) | 12 bits | if TR_TOGGLE =0 then inserts S(TABROOTTGL0_reg+x) else inserts S(TABROOTTGL1_reg+x) | 1 |
| GETCELLREL(x) | 4 bits | if TPC_TOGGLE=0 then S0 <= S(TabPreviousCellTGL1_reg+x) else S0 <= S(TabPreviousCellTGL0_reg+x) | 1 |

(suite)

| MANIPULATION DE TABLEAUX | | | |
|---|---|---|---|
| GCRTOGGLE | none | TPC_TOOGLE<=ITPC_TOOGLE<br>initial value is 0 | 0 |

Par souci de clarté, dans la suite de la description, pour les instructions SETROOT, ROOTTOGGLE, GETCELL (X) et GCRTOGGLE, on précise le rôle de chaque instruction et détaille sa mise en oeuvre matérielle, c'est-à-dire qu'on indique l'état ou l'action réalisée par chaque moyens M0 à M27 du dispositif de traitement selon l'invention. On rappelle que les instructions CELLREPL(X) et GETCELLREL(X) sont décrites au paragraphe 6.4 de ce document.

## 1. Instruction SETROOT

Cette instruction permet de modifier la valeur courante d'un pointeur d'élément de référence absolue, avec un bilan 0 sur la pile.
Cette instruction SETROOT est traduite par la séquence suivante:

M0 : décode l'instruction ;
M20 : si TR_TOGGLE = 0 alors
TABROOTTGL0_reg <= StackPointer
sinon
TABROOTTGL1_reg <= StackPointer;

Soient TABROOTTGL0_reg et TABROOTTGL1_reg, deux registres pouvant contenir chacun une adresse physique de la pile. Dans un mode de réalisation préférentiel, on utilise un registre TR_TOGGLE d'un bit permettant de gérer deux tableaux en accès absolu en sélectionnant l'un ou l'autre des deux registres précités, de la manière suivante : si TR_TOGGLE vaut « 0 », alors le registre R3 (Tabroottgl0_reg) prend la valeur du pointeur de pile (StackPointer), en revanche, si TR_TOGGLE vaut « 1 », alors le registre R4 (Tabroottgl1_reg) prend cette valeur ;

M23 : sélectionne la sortie correspondant à la valeur du pointeur de pile (StackPointer) ;
M22 : si TR_TOGGLE = 0 alors
TabPreviousCellTGL0_reg <= StackPointer
sinon
TabPreviousCellTGL1_reg <= StackPointer

Soient TabPreviousCellTGL0_reg et TabPreviousCellTGL1_reg, deux registres pouvant contenir chacun une adresse physique de la pile. Dans un mode de réalisation préférentiel, on utilise un registre TR_TOGGLE d'un bit permettant de gérer deux tableaux en accès relatif en sélectionnant l'un ou l'autre des deux registres précités, de la manière suivante : si TR_TOGGLE vaut « 0 », alors le registre R6 (TabPreviousCellTgl0_reg) prend la valeur du pointeur de pile (StackPointer), en revanche, si TR_TOGGLE vaut « 1 », alors le registre R7 (TabPreviousCellTg_reg) prend cette valeur.

## 2. Instruction ROOTTOGGLE

Cette instruction permet de changer de tableau, avec un bilan 0 sur la pile. Plus précisément, cette instruction permet de sélectionner un tableau parmi deux tableaux en sélectionnant la valeur courante d'un pointeur d'élément de référence absolue parmi deux valeurs possibles.
Cette instruction ROOTTOGGLE est traduite par la séquence suivante :

M0 : décode l'instruction ;
M24 : TR_TOGGLE <= not TR_TOGGLE
M24 change l'état du registre R5 (appartenant aux premiers moyens de sélection M24 d'un tableau parmi les deux tableaux en accès absolu) :

- si la sortie de R5 est à « 1 », alors M24 positionne la sortie à « 0 » ;
- en revanche, si la sortie de R5 est à « 0 », alors M24 positionne la sortie à « 1 ».

3. **Instruction GETCELL(X)**

Cette instruction permet d'insérer dans le premier étage de la pile le Xième élément d'un tableau, par rapport à un élément de référence absolue, avec un bilan 1 sur la pile.

Cette instruction GETCELL(X) est traduite par la séquence suivante :

M0 : décode l'instruction ;
M4 : état de repos (pas d'opération arithmétique, l'ALU n'est pas sélectionnée) ;
M7 : sélectionne la sortie des moyens de rattrapage des effets de bord du cache, nommée GetCellRelOut ;
M1 : sélectionne l'entrée correspondant à StackPointer-1 (bilan +1 sur la pile) ;
M2 : se réactualise au coup d'horloge suivant, si l'entrée enable du registre est à « 1 » (NextInstrAck=1) ;
M5 : sélectionne l'entrée correspondant à la sortie des moyens M20 de détermination de l'adresse physique de la DataRegième case du tableau sélectionné par TabRootTgl : TabRootTglx_reg +DataReg ;
M20 : calcule l'adresse physique de la DataRegième case du tableau sélectionné par TR_TOGGLE ;
M6 : sélectionne l'entrée StackPointer+1, la case physique correspondant à Etage 1 dans le plan mémoire doit être mis à jour avec la donnée ValR2 du registre R2 qui, quant à lui, va être mise à jour avec l'ancienne valeur ValR1 du registre R1 ;
M9 : état de repos ;
M0 : positionne les entrées memory enable « Me » et write enable « We » de M3 à « 1 », il y aura donc une lecture à l'adresse sélectionnée par M5 et une écriture à l'adresse sélectionnée par M6 ;
M8 : sélectionne l'entrée ValR1 (R1);
M21 : le multiplexeur d'entrée des comparateurs sélectionne TabRootPlusData;
M27 :

- si le comparateur d'égalité à « StackPointer » de M21 présente « 1 » en sortie, alors M27 sélectionne l'entrée ValR1 (R1) ;
- si le comparateur d'égalité à « StackPointer+1 » de M21 présente « 1 » en sortie, alors M27 sélectionne l'entrée ValR2 (R2) ;
- si aucun des comparateurs d'égalité à « StackPointer » et à « StackPointer+1 » n'est à « 1 », alors M27 sélectionne l'entrée SMDout.

4. **Instruction GCRTOGGLE**

Cette instruction permet de changer de pointeur TabPreviousCellTGLX_reg. Plus précisément, cette instruction permet de sélectionner un tableau parmi deux tableaux en sélectionnant la valeur courante d'un pointeur d'élément de référence relative parmi deux valeurs possibles, avec un bilan 0 sur la pile.

Cette instruction GCRTOGGLE est traduite par la séquence suivante :

M0 : décode l'instruction ;
M25 : TPC_TOGGLE <= not TPC_TOGGLE
M25 change l'état du registre R8 (appartenant aux seconds moyens de sélection M25 d'un tableau parmi les deux tableaux en accès relatif) :

- si la sortie de R8 est à « 1 », alors M25 positionne la sortie à « 0 » ;
- en revanche, si la sortie de R8 est à « 0 », alors M25 positionne la sortie « 1 ».

**ANNEXE 2 : Exemple de programme de calcul matriciel écrit en langage C**

```
func_mul_matrix22_by_cst(unsigned char coeff) {
  SETROOT();
  for(i=0; i<2; i++) {
    for(j=0;j<2;j++) {
      GETCELL(i*2+j);
      PUSHD(coeff);
      MUL32();
      CELLREPL(i*2+j)
    }
  }
}
```

**Revendications**

1. Dispositif de traitement en notation polonaise inversée, permettant d'exécuter un jeu d'instructions et mettant en oeuvre une gestion d'une pile dont la taille est variable, **caractérisé en ce qu'**il comprend :

   - des moyens de mémorisation comprenant une mémoire vive (MEM1) ;
   - des moyens (M0, M1, M2) de gestion d'un pointeur de pile, qui est une adresse physique, dans ladite mémoire vive, associée à un étage de référence de la pile, chaque étage de la pile étant tel que quand la pile évolue il occupe une position fixe dans la pile mais est associé à une adresse physique, dans ladite mémoire vive, qui varie ;
   - des moyens (M20, M24, M22, M23, M25) de gestion d'au moins un pointeur d'élément de référence, qui est une adresse physique, dans ladite mémoire vive, associée à un élément de référence parmi des éléments d'un tableau donné contenus dans la pile, ledit élément de référence étant tel que quand la pile évolue il peut se situer à différents étages de la pile mais est associé à une adresse physique qui ne varie pas,

   de sorte que le dispositif peut exécuter au moins une instruction de manipulation de tableau, relativement audit au moins un pointeur d'élément de référence.

2. Dispositif selon la revendication 1, **caractérisé en ce que** lesdits moyens de gestion d'au moins un pointeur d'élément de référence comprennent des moyens (M20, M24) de gestion d'un pointeur d'élément de référence absolue, qui est une adresse physique, dans ladite mémoire vive, associée à un élément de référence absolue parmi les éléments d'un tableau donné contenus dans la pile.

3. Dispositif selon l'une quelconque des revendications 1 et 2, **caractérisé en ce que** lesdits moyens de gestion d'au moins un pointeur d'élément de référence comprennent des moyens (M22, M23, M25) de gestion d'un pointeur d'élément de référence relative, qui est une adresse physique, dans ladite mémoire vive, associée à un élément de référence relative parmi les éléments d'un tableau donné contenus dans la pile.

4. Dispositif selon l'une quelconque des revendications 1 à 3, **caractérisé en ce que** lesdits moyens de gestion d'au moins un pointeur d'élément de référence comprennent, pour chaque pointeur d'élément de référence, au moins un registre (R3, R4, R6, R7) contenant la valeur courante dudit pointeur d'élément de référence pour un tableau donné.

5. Dispositif selon les revendications 2 et 4, **caractérisé en ce que** lesdits moyens (M20, M24) de gestion d'un pointeur d'élément de référence absolue comprennent au moins un premier registre (R3, R4) contenant la valeur courante dudit pointeur d'élément de référence absolue pour un tableau donné, l'entrée de chaque premier registre recevant la valeur courante dudit pointeur de pile (StackPointer), chaque premier registre étant activé par un signal d'activation prenant un état actif quand l'instruction courante est une instruction (SETROOT) impliquant un changement d'élément de référence absolue pour ledit tableau donné.

6. Dispositif selon les revendications 3 et 4, **caractérisé en ce que** lesdits moyens (M22, M23, M25) de gestion d'un pointeur d'élément de référence relative comprennent au moins un deuxième registre (R6, R7) contenant la valeur courante dudit pointeur d'élément de référence relative pour un tableau donné, l'entrée de chaque deuxième registre recevant l'un des signaux suivants en fonction de l'instruction courante :

- la valeur courante dudit pointeur de pile (StackPointer),
- la valeur courante d'un pointeur d'élément de référence absolue pour un tableau donné, incrémentée d'un nombre X d'unités (DataReg) indiqué dans un mot d'opérande d'une instruction courante (TabRootPlusData) ;
- la valeur courante d'un pointeur d'élément de référence relative pour un tableau donné, incrémentée d'un nombre X d'unités (DataReg) indiqué dans un mot d'opérande d'une instruction courante (TabPreviousCell-PlusData),

chaque deuxième registre étant activé par un signal d'activation prenant un état actif quand l'instruction courante est une instruction (SETROOT, GETCELL, GETCELLREL) impliquant un changement d'élément de référence relative pour ledit tableau donné.

7. Dispositif selon l'une quelconque des revendications 4 à 6, **caractérisé en ce que** lesdits moyens de gestion d'au moins un pointeur d'élément de référence comprennent, pour chaque pointeur d'élément de référence :

- au moins deux premiers (R3, R4) ou deuxièmes (R6, R7) registres contenant chacun la valeur courante dudit pointeur d'élément de référence pour un tableau donné ;
- des moyens (M24, M25) de sélection d'un desdits au moins deux premiers ou deuxièmes registres, de façon à sélectionner un tableau parmi au moins deux tableaux.

8. Dispositif selon l'une quelconque des revendications 2 à 7, **caractérisé en ce que** lesdits moyens (M20, M24) de gestion d'un pointeur d'élément de référence absolue comprennent des moyens d'addition (ADD1) de la valeur courante dudit pointeur d'élément de référence absolue, pour un tableau donné, avec un nombre X d'unités (DataReg) indiqué dans un mot d'opérande d'une instruction courante, de façon à déterminer l'adresse physique (TabRootPlusData), dans ladite mémoire vive, d'un étage de la pile dont le contenu est le Xième élément dudit tableau donné à partir dudit élément de référence absolue.

9. Dispositif selon l'une quelconque des revendications 3 à 8, **caractérisé en ce que** lesdits moyens (M23, M22, M25) de gestion d'un pointeur d'élément de référence relative comprennent des moyens d'addition (ADD2) de la valeur courante dudit pointeur d'élément de référence relative, pour un tableau donné, avec un nombre X d'unités (DataReg) indiqué dans un mot d'opérande d'une instruction courante, de façon à déterminer l'adresse physique (TabPreviousCellPlusData), dans ladite mémoire vive, d'un étage de la pile dont le contenu est le Xième élément dudit tableau donné à partir dudit élément de référence relative.

10. Dispositif selon l'une quelconque des revendications 1 à 9, le jeu d'instructions étant tel que chaque instruction comprend au maximum N opérandes, avec N≥ 1, **caractérisé en ce que** lesdits moyens de mémorisation comprennent en outre une mémoire cache (MEM2), et **en ce que** ledit dispositif comprend en outre des moyens (M0, M5, M6, M9, M3, M7, M8, M21, M27) de gestion des contenus des étages de la pile, en fonction dudit pointeur de pile :

* tels que, pour chacun des N premiers étages de la pile, le contenu dudit étage est stocké dans ladite mémoire cache (MEM2), et pour chacun des autres étages de la pile, le contenu dudit étage est stocké dans ladite mémoire vive (MEM1), à l'adresse physique associée audit étage ;
* permettant de gérer des débordements de contenu, depuis la mémoire cache vers la mémoire vive, et inversement.

11. Dispositif selon la revendication 10, **caractérisé en ce que** N est égal à 2.

12. Dispositif selon l'une quelconque des revendications 1 à 11, **caractérisé en ce qu'**il est compris dans un co-processeur destiné à coopérer avec un processeur principal.

**13.** Dispositif selon l'une quelconque des revendications 1 à 12, **caractérisé en ce que** ledit étage de référence de la pile est le premier étage de la pile (Etage0).

**14.** Dispositif selon l'une quelconque des revendications 1 à 13, **caractérisé en ce que** lesdits moyens (M0, M1, M2) de gestion du pointeur de pile comprennent :

   - un premier multiplexeur (M1) :

      * possédant trois entrées recevant respectivement : une valeur courante du pointeur de pile (StackPointer), ladite valeur courante du pointeur de pile incrémentée d'une unité (StackPointer+1), et ladite valeur courante du pointeur de pile décrémentée d'une unité (StackPointer-1) ;
      * délivrant en sortie l'une des trois valeurs d'entrée, en fonction d'un premier signal de commande (S1) prenant en compte le bilan sur la pile, +1, -1 ou 0, d'une instruction courante ;

   - un troisième registre (M2) contenant ladite valeur courante dudit pointeur de pile, l'entrée dudit troisième registre (M2) étant reliée à la sortie dudit premier multiplexeur (M1), ledit troisième registre (M2) étant activé par un signal d'activation (En) indiquant qu'une instruction suivante est prête (NextInstrAck=1).

**15.** Dispositif selon l'une quelconque des revendications 10 à 14, **caractérisé en ce que** lesdits moyens de gestion des contenus des étages de la pile comprennent des moyens (M6) de détermination de la prochaine adresse d'écriture (AddWr) dans ladite mémoire vive, comprenant eux-mêmes :

   - un deuxième multiplexeur (M6):

      * possédant une pluralité d'entrées recevant chacune une valeur courante du pointeur de pile incrémentée ou décrémentée d'une valeur déterminée (+DataReg, +1, -1, +2) distincte pour chaque entrée ;
      * délivrant en sortie l'une des valeurs d'entrée, en fonction d'un deuxième signal de commande (S2) qui est fonction d'une instruction courante.

   et **en ce que** ladite pluralité d'entrées du deuxième multiplexeur (M6) comprend au moins une des deux entrées suivantes :
   - une entrée recevant la valeur courante d'un pointeur d'élément de référence absolue pour un tableau donné, incrémentée d'un nombre X d'unités (DataReg) indiqué dans un mot d'opérande d'une instruction courante (TabRootPlusData) ;
   - une entrée recevant la valeur courante d'un pointeur d'élément de référence relative pour un tableau donné, incrémentée d'un nombre X d'unités (DataReg) indiqué dans un mot d'opérande d'une instruction courante (TabPreviousCellPlusData).

**16.** Dispositif selon l'une quelconque des revendications 10 à 15, **caractérisé en ce que** lesdits moyens de gestion des contenus des étages de la pile comprennent des moyens de détermination de la prochaine adresse de lecture (AddrRd) dans ladite mémoire vive, comprenant eux-mêmes :

   - un troisième multiplexeur (M5) :

      * possédant une pluralité d'entrées recevant chacune une valeur courante du pointeur de pile incrémentée ou décrémentée d'une valeur déterminée (+DataReg, +1, -1, +2) distincte pour chaque entrée ;
      * délivrant en sortie l'une des valeurs d'entrée, en fonction d'un troisième signal de commande (S3) qui est fonction d'une instruction courante,

   et **en ce que** ladite pluralité d'entrées du troisième multiplexeur (M5) comprend au moins une des deux entrées suivantes :
   - une entrée recevant la valeur courante d'un pointeur d'élément de référence absolue pour un tableau donné, incrémentée d'un nombre X d'unités (DataReg) indiqué dans un mot d'opérande d'une instruction courante (TabRootPlusData) ;
   - une entrée recevant la valeur courante d'un pointeur d'élément de référence relative pour un tableau donné, incrémentée d'un nombre X d'unités (DataReg) indiqué dans un mot d'opérande d'une instruction courante (TabPreviousCellPlusData).

17. Dispositif selon l'une quelconque des revendications 15 et 16, **caractérisé en ce que** ladite pluralité d'entrées du deuxième (M6) ou troisième (M5) multiplexeur comprend en outre au moins une entrée appartenant au groupe comprenant

- une entrée recevant ladite valeur courante du pointeur de pile incrémentée d'un nombre d'unités (DataReg) indiqué dans un mot d'opérande de ladite instruction courante ;
- une entrée recevant ladite valeur courante du pointeur de pile incrémentée d'une unité ;
- une entrée recevant ladite valeur courante du pointeur de pile incrémentée de deux unité ;
- une entrée recevant ladite valeur courante du pointeur de pile décrémentée d'une unité.

18. Dispositif selon l'une quelconque des revendications 10 à 17, **caractérisé en ce que** lesdits moyens de gestion des contenus des étages de la pile comprennent des moyens (M21) de détermination des effets de bord de la mémoire cache, comprenant eux-mêmes :

- un premier comparateur (COMP1), permettant de faire une comparaison entre d'une part la valeur courante d'un pointeur d'élément de référence incrémentée d'un nombre X d'unités (DataReg) indiqué dans un mot d'opérande d'une instruction courante (TabRootPlusData ou TabPreviousCellPlusData), et d'autre part la valeur courante du pointeur de pile (Stackpointer) ;
- un deuxième comparateur (COMP2), permettant de faire une comparaison entre d'une part la valeur courante d'un pointeur d'élément de référence incrémentée d'un nombre X d'unités (DataReg) indiqué dans un mot d'opérande d'une instruction courante (TabRootPlusData ou TabPreviousCellPlusData), et d'autre part la valeur courante du pointeur de pile (Stackpointer) incrémentée d'une unité ;

de façon à déterminer si la valeur courante du pointeur d'élément de référence incrémentée du nombre X d'unités est une adresse physique, dans ladite mémoire vive, associée à un étage de la pile dont le contenu est stocké dans la mémoire vive (RAM) ou dans la mémoire cache (Stage0, Stage1).

19. Dispositif selon la revendication 18, **caractérisé en ce que** lesdits moyens (M21) de détermination des effets de bord de la mémoire cache, comprennent en outre :

- un troisième comparateur (COMP3), permettant de faire une comparaison entre d'une part la valeur courante d'un pointeur d'élément de référence incrémentée d'un nombre X d'unités (DataReg) indiqué dans un mot d'opérande d'une instruction courante (TabRootPlusData ou TabPreviousCellPlusData), et d'autre part la valeur courante du pointeur de pile (Stackpointer) incrémentée de deux unités ;

de façon à déterminer si la valeur courante du pointeur d'élément de référence incrémentée du nombre X d'unités est une adresse physique, dans ladite mémoire vive, associée au N+1ième étage de la pile dont le contenu est stocké dans la mémoire vive (RAM).

20. Dispositif selon l'une quelconque des revendications 18 et 19, **caractérisé en ce que** lesdits moyens (M21) de détermination des effets de bord de la mémoire cache comprennent en outre :

- un cinquième multiplexeur (M28) :

* possédant deux entrées recevant respectivement :

- la valeur courante d'un pointeur d'élément de référence absolue pour un tableau donné, incrémentée d'un nombre X d'unités (DataReg) indiqué dans un mot d'opérande d'une instruction courante (TabRootPlusData) ;
- la valeur courante d'un pointeur d'élément de référence relative pour un tableau donné, incrémentée d'un nombre X d'unités (DataReg) indiqué dans un mot d'opérande d'une instruction courante (TabPreviousCellPlusData) ;

* délivrant en sortie l'une des valeurs d'entrée, en fonction d'un cinquième signal de commande (S8).

21. Dispositif selon l'une quelconque des revendications 18 à 20, **caractérisé en ce que** lesdits moyens de gestion des contenus des étages de la pile comprennent des moyens de détermination de la prochaine valeur à écrire dans ladite mémoire cache pour le contenu du premier étage, comprenant eux-mêmes:

- un sixième multiplexeur (M7) :

* possédant une pluralité d'entrées recevant chacune une valeur déterminée distincte, ladite pluralité d'entrées comprenant :

- une entrée recevant la valeur courante du contenu du premier étage ;
- une entrée recevant la valeur courante du contenu du deuxième étage ;
- une entrée recevant une valeur (GetCellRelOut) délivrée par des moyens (M27) de rattrapage des effets de bord de la mémoire cache ;

* délivrant en sortie l'une des valeurs d'entrée, en fonction de :

- un sixième signal de commande (S5), qui est fonction d'une instruction courante, et/ou
- un septième signal de commande (S9), délivré par lesdits moyens (M21) de détermination des effets de bord de la mémoire cache, qui indique si la valeur courante du pointeur d'élément de référence incrémentée du nombre X d'unités est égale à la valeur courante du pointeur de pile (Stackpointer) incrémentée d'une unité ;

et **en ce que** ladite mémoire cache comprend un quatrième registre (R1) contenant une valeur courante du contenu du premier étage, l'entrée dudit quatrième registre étant reliée à la sortie dudit sixième multiplexeur (M7), ledit quatrième registre étant activé par un signal d'activation (En) indiquant qu'une instruction suivante est prête (NextInstrAck=1).

22. Dispositif selon la revendication 21, **caractérisé en ce que** ladite pluralité d'entrées du sixième multiplexeur (M7) comprend en outre au moins une entrée appartenant au groupe comprenant :

- une entrée recevant une valeur (DataReg) indiquée dans un mot d'opérande de ladite instruction courante ;
- une entrée recevant une donnée (SMDout) lue dans la mémoire vive lors de l'exécution d'une instruction courante ;
- une entrée recevant une donnée (ALUout) calculée lors de l'exécution d'une instruction courante.

23. Dispositif selon l'une quelconque des revendications 18 à 22, **caractérisé en ce que** lesdits moyens de gestion des contenus des étages de la pile comprennent des moyens de détermination de la prochaine valeur à écrire dans ladite mémoire cache pour le contenu du deuxième étage, comprenant eux-mêmes :

- un septième multiplexeur (M8) :

* possédant une pluralité d'entrées recevant chacune une valeur déterminée distincte, ladite pluralité d'entrées comprenant :

- une entrée recevant la valeur courante du contenu du premier étage ;
- une entrée recevant la valeur courante du contenu du deuxième étage ;
- une entrée recevant une donnée (SMDout) lue dans la mémoire vive lors de l'exécution d'une instruction courante ;

* délivrant en sortie l'une des valeurs d'entrée, en fonction de :

- un huitième signal de commande (S6), qui est fonction d'une instruction courante, et/ou
- un septième signal de commande (S9), délivré par lesdits moyens (M21) de détermination des effets de bord de la mémoire cache, qui indique si la valeur courante du pointeur d'élément de référence incrémentée du nombre X d'unités est égale la valeur courante du pointeur de pile incrémentée d'une unité ; et/ou
- un neuvième signal de commande (S10), délivré par lesdits moyens (M21) de détermination des effets de bord de la mémoire cache, et qui indique si la valeur courante du pointeur d'élément de référence incrémentée du nombre X d'unités est égale la valeur courante du pointeur de pile incrémentée de deux unités ;

et **en ce que** ladite mémoire cache comprend un cinquième registre (R2) contenant une valeur courante du contenu du deuxième étage, l'entrée dudit cinquième registre étant reliée à la sortie dudit septième multiplexeur (M8), ledit cinquième registre étant activé par un signal d'activation (En) indiquant qu'une instruction suivante est prête (NextInstrAck=1).

**24.** Dispositif selon l'une quelconque des revendications 10 à 23, **caractérisé en ce que** lesdits moyens de gestion des contenus des étages de la pile comprennent des moyens (M27) de rattrapage des effets de bord de la mémoire cache, comprenant eux-mêmes :

- un huitième multiplexeur (M27) :

  * possédant les entrées suivantes:

    - une entrée recevant la valeur courante du contenu du premier étage;
    - une entrée recevant la valeur courante du contenu du deuxième étage;
    - une entrée recevant une donnée (SMDout) lue dans la mémoire vive lors de l'exécution d'une instruction courante ;

  * délivrant en sortie l'une des valeurs d'entrée, en fonction de septième et dixième signaux de commande (S9, S11) délivrés par lesdits moyens (M21) de détermination des effets de bord de la mémoire cache, de façon telle que la sortie délivre :

    - la valeur courante du contenu du premier étage, si le dixième signal de commande (S11) indique que la valeur courante du pointeur d'élément de référence incrémentée du nombre X d'unités est égale à la valeur courante du pointeur de pile ;
    - la valeur courante du contenu du deuxième étage, si le septième signal de commande (S9) indique que la valeur courante du pointeur d'élément de référence incrémentée du nombre X d'unités est égale à la valeur courante du pointeur de pile incrémentée d'une unité ;
    - la donnée (SMDout) lue dans la mémoire vive lors de l'exécution d'une instruction courante, si les septième et dixième signaux de commande (S9, S11) indiquent ensemble que la valeur courante du pointeur d'élément de référence incrémentée du nombre X d'unités est égale à la valeur courante du pointeur de pile incrémentée de plus d'une unité.

**25.** Dispositif selon l'une quelconque des revendications 14 à 24, **caractérisé en ce que** chaque signal de commande (S1 à S8) est délivré par un décodeur d'instruction (M0) qui traite ladite instruction courante contenue dans un registre d'instruction (RI).

**26.** Dispositif selon l'une quelconque des revendications 1 à 25, **caractérisé en ce que** ledit jeu d'instructions comprend au moins une instruction de manipulation de tableau appartenant au groupe comprenant :

- une instruction (SETROOT) permettant de modifier la valeur courante d'un pointeur d'élément de référence absolue ;
- une instruction (ROOTTOGGLE) permettant de sélectionner un tableau parmi deux tableaux en sélectionnant la valeur courante d'un pointeur d'élément de référence absolue parmi deux valeurs possibles ;
- une instruction (CELLREPL(X)) permettant de remplacer le Xième élément d'un tableau, par rapport à un élément de référence absolue, par un élément contenu dans le premier étage de la pile, ledit élément contenu dans le premier étage de la pile étant absorbé;
- une instruction (GETCELL(X)) permettant d'insérer dans le premier étage de la pile le Xième élément d'un tableau, par rapport à un élément de référence absolue ;
- une instruction (GETCELLREL(X)) permettant d'insérer dans le premier étage de la pile le Xième élément d'un tableau, par rapport à un élément de référence relative ;
- une instruction (GCRTOGGLE) permettant de sélectionner un tableau parmi deux tableaux en sélectionnant la valeur courante d'un pointeur d'élément de référence relative parmi deux valeurs possibles.

**27.** Circuit intégré électronique, **caractérisé en ce qu'**il comprend un dispositif de traitement selon l'une quelconque des revendications 1 à 26.

T0 : TABROOTTGL0_reg
T1 : TABROOTTGL1_reg
D1 : StackPointer
D2 : DataReg
D3 : SetRootSample
D4 : TR_TOGGLE
D5 : ROOTTOGGLE
D6 : TabRootPlusData
D7 : TabPreviousCellPlusData
D8 : TPC_TOGGLE
D9 : PLA control

Fig. 1

Fig. 2

T0 : TABROOTTGL0_reg
T1 : TABROOTTGL1_reg
D1 : StackPointer
D2 : DataReg
D3 : SetRootSample
D4 : TR_TOGGLE
D5 : TabRootPlusData
D6 : PLA control

Fig. 3

Fig. 4

D1 : StackPointer
D2 : DataReg
D3 : GCRTOGGLE
D4 : TR_TOGGLE
D5 : TabRootPlusData
D6 : PLA control
D7 : TabPreviousCellPlusData
D8 : TPC_TOGGLE
D9 : GetCellRelOut

Etages de la pile

| Etage | $t_o$ | $t_{o+1}$ | $t_{o+2}$ | $t_{o+3}$ | $t_{o+4}$ | $t_{o+5}$ | $t_{o+6}$ | $t_{o+7}$ | $t_{o+8}$ | $t_{o+9}$ | $t_{o+10}$ | $t_{o+11}$ | $t_{o+12}$ | $t_{o+13}$ | $t_{o+14}$ | $t_{o+15}$ | $t_{o+16}$ | $t_{o+17}$ |
|---|---|---|---|---|---|---|---|---|---|---|---|---|---|---|---|---|---|---|
| Etage 5 | | | | 4 | | | | 4 | | | | 4 | | | | 4 | | |
| Etage 4 | | | 4 | 3 | 4 | | 4 | 3 | 4 | | 4 | 3 | 4 | | 4 | 9 | 4 | |
| Etage 3 | 4 | 4 | 3 | 2 | 3 | 4 | 3 | 2 | 3 | 4 | 3 | 6 | 3 | 4 | 9 | 6 | 9 | 12 |
| Etage 2 | 3 | 3 | 2 | 1 | 2 | 3 | 2 | 3 | 2 | 3 | 6 | 3 | 6 | 9 | 6 | 3 | 6 | 9 |
| Etage 1 | 2 | 2 | 1 | 1 | 1 | 2 | 3 | 2 | 3 | 6 | 3 | 3 | 3 | 6 | 3 | 4 | 3 | 6 |
| Etage 0 | 1 | 1 | 1 | 3 | 3 | 3 | 2 | 3 | 6 | 3 | 3 | 3 | 9 | 3 | 4 | 3 | 12 | 3 |

Cycle / opération :
SETROOT, GETCELL(0), push(3), MUL32, CELLREPL(0), GETCELL(1), push(3), MUL32, CELLREPL(1), GETCELL(2), push(3), MUL32, CELLREPL(2), GETCELL(3), push(3), MUL32, CELLREPL(3)

Fig. 5

| | t_o | t_o+1 | t_o+2 | t_o+3 | t_o+4 | t_o+5 | t_o+6 | t_o+7 |
|---|---|---|---|---|---|---|---|---|
| STACKSIZE | 4 | 4 | 5 | 6 | 5 | 4 | 5 | 6 |
| STACKPOINTER | @high-3 | @high-3 | @high-4 | @high-5 | @high-4 | @high-3 | @high-4 | @high-5 |
| RAM @1 | 0000 | 0000 | 0000 | 0000 | 0000 | 0000 | 0000 | 0000 |
| RAM @0 | 0000 | 0000 | 0000 | 0000 | 0000 | 0000 | 0000 | 0000 |
| RAM @high | 0004 | 0004 | 0004 | 0004 | 0004 | 0004 | 0004 | 0004 |
| RAM @high-1 | 0003 | 0003 | 0003 | 0003 | 0003 | 0003 | 0003 | 0003 |
| RAM @high-2 | XXXX | XXXX | 0002 | 0002 | 0002 | 0002 | 0002 | 0002 |
| RAM @high-3 | XXXX | XXXX | XXXX | 0001 | 0001 | 0001 | 0001 | 0003 |
| RAM @high-4 | XXXX | XXXX | XXXX | XXXX | XXXX | XXXX | XXXX | XXXX |
| RAM @high-5 | XXXX | XXXX | XXXX | XXXX | XXXX | XXXX | XXXX | XXXX |
| TABROOTTGL0_reg | @high-3 | | | | | | | |
| TR_TOGGLE | 0 | | | | | | | |
| TabRootPlusData | DC | @high-3 | DC | DC | @high-3 | @high-2 | DC | DC |
| R2 (Stage 1) | 0002 | 0002 | 0001 | 0001 | 0001 | 0002 | 0003 | 0002 |
| R1 (Stage 0) | 0001 | 0001 | 0001 | 0003 | 0003 | 0003 | 0002 | 0003 |

Cycle
opération

| t_o | t_o+1 | t_o+2 | t_o+3 | t_o+4 | t_o+5 | t_o+6 | t_o+7 |
|---|---|---|---|---|---|---|---|
| SETROOT | GETCELL(0) | push(3) | MUL32() | CELLREPL(0) | GETCELL(1) | push(3) | MUL32() |

## Fig. 6

**Office européen des brevets**

**RAPPORT DE RECHERCHE EUROPEENNE**

Numéro de la demande

EP 07 10 0940

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | PHILIP J. KOOPMAN: [Online] 1989, MOUNTAIN VIEW PRESS , USA , XP002408243 Extrait de l'Internet: URL:http://www.ece.cmu.edu/~koopman/stack_computers> [extrait le 2006-11-20] online book * page 1 - page 234 * * alinéa [2.1.3] * * figure 3.1 * * alinéa [3.2.2.1] * * figure 4.1 * * tableau 3.1 * * tableau 4.1 * * figure 4.4 * * figure 4.6 * * figure 4.8 * * figure 5.1 * * tableau 5.1 * * figure 5.3 * * figure 5.6 * * alinéa [08.4] * Appendix A,B | 1-27 | INV. G06F7/78 G06F9/06 G06F15/76 |
| | ----- | | |
| A | WO 97/15001 A2 (PATRIOT SCIENT CORP [US]; SHAW GEORGE W [US]; MCCLURG MARTIN G [US]; J) 24 avril 1997 (1997-04-24) * alinéa [0078] - alinéa [0138] * * figure 3 * | 1-27 | **DOMAINES TECHNIQUES RECHERCHES (IPC)** G06F |
| | ----- | | |
| A | US 6 289 418 B1 (KOPPALA SAILENDRA [US]) 11 septembre 2001 (2001-09-11) * figures 1-3,8 * | 1-27 | |
| | ----- | | |
| | -/-- | | |

Le présent rapport a été établi pour toutes les revendications

| Lieu de la recherche | Date d'achèvement de la recherche | Examinateur |
|---|---|---|
| Munich | 14 mai 2007 | Post, Katharina |

**Office européen des brevets**

## RAPPORT DE RECHERCHE EUROPEENNE

Numéro de la demande

EP 07 10 0940

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | EP 0 915 415 A2 (MICROCHIP TECH INC [US] MICROCHIP TECH INC) 12 mai 1999 (1999-05-12) * figure 1 * ----- | 1-27 | |
| A | US 4 980 821 A (KOOPMAN PHILIP J [US] ET AL) 25 décembre 1990 (1990-12-25) * abrégé; figure 1 * ----- | 1-27 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Munich | 14 mai 2007 | Post, Katharina |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

& : membre de la même famille, document correspondant

EPO FORM 1503 03.82 (P04C02)

**EP 1 811 371 A1**

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

14-05-2007

| Document brevet cité au rapport de recherche | | Date de publication | Membre(s) de la famille de brevet(s) | | Date de publication |
|---|---|---|---|---|---|
| WO 9715001 | A2 | 24-04-1997 | AT | 241170 T | 15-06-2003 |
| | | | DE | 69628326 D1 | 26-06-2003 |
| | | | EP | 0870226 A2 | 14-10-1998 |
| | | | JP | 11513825 T | 24-11-1999 |
| | | | JP | 3739797 B2 | 25-01-2006 |
| | | | JP | 2006024233 A | 26-01-2006 |
| | | | JP | 2007042131 A | 15-02-2007 |
| US 6289418 | B1 | 11-09-2001 | AUCUN | | |
| EP 0915415 | A2 | 12-05-1999 | JP | 11265287 A | 28-09-1999 |
| | | | US | 6205539 B1 | 20-03-2001 |
| | | | US | 5958039 A | 28-09-1999 |
| US 4980821 | A | 25-12-1990 | AUCUN | | |

EPO FORM P0460

Pour tout renseignement concernant cette annexe : voir Journal Officiel de l'Office européen des brevets, No.12/82